# EUROPEAN PATENT SPECIFICATION

(11) **EP 3 455 054 B1**
(45) Date of publication and mention of the grant of the patent: **29.03.2023**
(21) Application number: 16901843.9
(22) Date of filing: 12.05.2016
(51) Int. Cl.: B29C 64/165, B33Y 70/00, B33Y 10/00, B33Y 50/02, B29C 35/02, B22F 1/00, B22F 10/10, B22F 10/20, B22F 10/30, B22F 1/10, B22F 10/28, B33Y 70/10, B22F 3/105, B22F 9/00

(54) **THREE-DIMENSIONAL PRINTING METHOD**
DREIDIMENSIONALES DRUCKVERFAHREN
PROCEDE D'IMPRESSION EN TROIS DIMENSIONS

(43) Date of publication of application: 20.03.2019
(73) Proprietor: Hewlett-Packard Development Company, L.P., Spring TX 77389 (US)
(72) Inventor: RUDISILL, Stephen G., San Diego, California 92127-1899 (US); KABALNOV, Alexey S., San Diego, California 92127-1899 (US); ERICKSON, Kristopher J., Palo Alto, California 94304-1100 (US); TOM, Howard S., Palo Alto, California 94304-1100 (US); ZHAO, Lihua, Palo Alto, California 94304-1100 (US)
(74) Representative: HGF
(86) International application number: PCT/US2016/032023
(87) International publication number: WO 2017/196328

(56) References cited:
- EP-B1- 2 001 656
- WO-A1-03/028985
- WO-A1-2015/109102
- WO-A1-2015/167520
- WO-A1-2016/048380
- CN-U- 203 992 400
- US-A1- 2015 159 007
- US-A1- 2015 217 367

## Description

### BACKGROUND

Three-dimensional (3D) printing may be an additive printing process used to make three-dimensional solid parts from a digital model. 3D printing is often used in rapid product prototyping, mold generation, mold master generation, and short run manufacturing. Some 3D printing techniques are considered additive processes because they involve the application of successive layers of material. This is unlike traditional machining processes, which often rely upon the removal of material to create the final part. 3D printing often requires curing or fusing of the building material, which for some materials may be accomplished using heat-assisted extrusion, melting, or sintering, and for other materials may be accomplished using digital light projection technology.
WO 2016/048380 discloses coalescent inks and material sets for 3D printing. US 2015/217367 A1 discloses methods of printing metallic objects.

### BRIEF DESCRIPTION OF THE DRAWINGS

Features of examples of the present disclosure will become apparent by reference to the following detailed description and drawings, in which like reference numerals correspond to similar, though perhaps not identical, components. For the sake of brevity, reference numerals or features having a previously described function may or may not be described in connection with other drawings in which they appear.

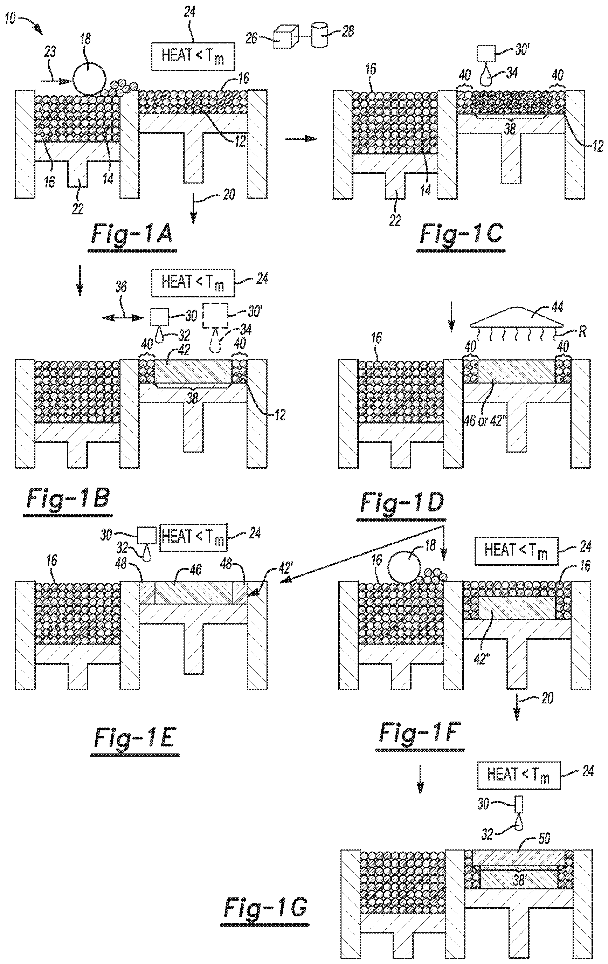

Figs. 1A and 1B are schematic, cross-sectional views which together depict two different examples of the 3D printing method disclosed herein;
Figs. 1A and 1C-1E are schematic, cross-sectional views which together depict another example of the 3D printing method disclosed herein;
Figs. 1A, 1C, 1D, 1F, and 1G are schematic, cross-sectional views which together depict still another example of the 3D printing method disclosed herein;
Fig. 2 is a graph depicting a reduction in the melting temperature and the recrystallization temperature of polyamide 12 with respect to a mass fraction of 2-pyrrolidone applied to the polyamide 12;
Figs. 3-5 are photographs (shown in black and white) of different examples of 3D parts formed using different examples of the melt flow property reduction agent disclosed herein;
Fig. 6 is a photograph (shown in black and white) of three 3D parts formed using different amounts of another example of the melt flow property reduction agent disclosed herein;
Fig. 7 is a photograph (shown in black and white) of different examples of 3D parts formed using different examples of the melt flow property reduction agent in combination with a liquid functional agent; and
Fig. 8 is a graph depicting the modulus, strength, and elongation at break of example 3D parts.

### DETAILED DESCRIPTION

Multi Jet Fusion (MJF) is one example of a 3D printing method. During an example of MJF, an entire layer of a build material (e.g., crystalline or semi-crystalline build materials) is exposed to radiation, but a selected region (in some instances less than the entire layer) of the build material is fused and hardened to become a layer of a 3D part. In some examples of MJF, a liquid functional agent (sometimes referred to as a fusing agent) is selectively deposited in contact with the selected region of the build material. The liquid functional agent(s) is capable of penetrating into the layer of the build material and spreading onto the exterior surface of the build material. This liquid functional agent is also capable of absorbing radiation and converting the absorbed radiation to thermal energy, which in turn melts, coalesces, or sinters the build material that is in contact with the liquid functional agent. This causes the build material to fuse, bind, cure, etc. to form the layer of the 3D part.

The previously described example of MJF may involve uncontrolled temperature build up within the regions patterned with the liquid functional agent, which can lead to melt down of the parts and/or thermal bleed. During thermal bleed, unpatterned regions of the build material proximate to the patterned regions unintentionally fuse due to heat spreading from the patterned regions to the unpatterned regions. Thermal bleed may be a function of thermal gradients in the printing system.
According to an aspect of the disclosure there is provided a three-dimensional (3D) printing method, comprising: applying a crystalline or semi-crystalline build material, wherein the crystalline or semi-crystalline build material is a polymer in powder form; a metal in particulate form; or a hydrocarbon wax material in particulate form; maintaining a temperature of the crystalline or semi-crystalline build material within 100°C below a melting point of the crystalline or semi-crystalline build material; and applying a melt flow property reduction agent to at least a portion of the crystalline or semi-crystalline build material, wherein the melt flow property reduction agent reduces the melting or coalescing temperature of the at least a portion of the crystalline or semi-crystalline build material, thereby causing the at least the portion of the crystalline or semi-crystalline build material in contact with the melt flow property reduction agent to melt or coalesce at the temperature.
According to a further aspect of the disclosure there is provided a three-dimensional (3D) printing method, comprising: applying a crystalline or semi-crystalline build material; wherein the crystalline or semi-crystalline build material is a polymer in powder form; a metal in particulate form; or a hydrocarbon wax material in particulate form; applying a liquid functional agent to a portion of the crystalline or semi- crystalline build material, wherein the liquid functional agent includes a radiation absorber; exposing the crystalline or semi-crystalline build material to radiation, whereby the liquid functional agent at least partially fuses the portion of the crystalline or semi- crystalline build material in contact with the liquid functional agent to form a part layer; maintaining a temperature of the crystalline or semi-crystalline build material within 100°C below a melting point of the crystalline or semi-crystalline build material; and applying a melt flow property reduction agent to another portion of the build material, wherein the melt flow property reduction agent reduces the melting or coalescing temperature of the another portion of the build material, thereby causing the other portion of the build material in contact with the melt flow property reduction agent to melt or coalesce at the temperature.
According to another aspect of the disclosure there is provided a three-dimensional (3D) printing method, comprising: applying a crystalline or semi-crystalline build material, wherein the crystalline or semi-crystalline build material is a polymer in powder form; a metal in particulate form; or a hydrocarbon wax material in particulate form; applying a liquid functional agent to at least a portion of the build material, wherein the liquid functional agent includes a radiation absorber; exposing the build material to radiation, whereby the liquid functional agent at least partially fuses the portion of the build material in contact with the liquid functional agent to form a part layer; applying additional crystalline or semi-crystalline build material to the part layer; maintaining a temperature of the additional crystalline or semi-crystalline build material within 100°C below the melting point of the crystalline or semi-crystalline build material; and applying a melt flow property reduction agent to at least a portion of the additional crystalline or semi-crystalline build material, wherein the melt flow property reduction agent reduces the melting or coalescing temperature of the at least a portion of the additional crystalline or semi-crystalline build material, thereby causing the at least the portion of the additional build material in contact with the melt flow property reduction agent to melt or coalesce at the temperature and to form a surface layer on the part layer.

The methods disclosed herein utilize a melt flow property reduction agent to selectively control the melt flow properties (e.g., melting temperature/melting point (Tₘ) and viscosity) of the crystalline or semi-crystalline build material, in some instances, without making substantially, or any, changes to the temperature of the printing system. When the loading of the melt flow property reduction agent is sufficient (with respect to the crystalline or semi-crystalline build material), the melt flow property reduction agent locally cools the patterned region, causing the patterned region to absorb heat from the surroundings, rather than transferring heat into the non-patterned regions. Additionally, the diffusion of liquid out of the patterned region is orders of magnitude slower than heat transfer. These factors reduce or eliminate thermal bleed, and thus also reduce or eliminate the deleterious effects of thermal bleed.

When the loading of the melt flow property reduction agent is sufficient (with respect to the crystalline or semi-crystalline build material), the melt flow property reduction agent selectively reduces the melting temperature/point of the build material in the patterned regions, and thus enables the build material to be fused in the presence of a reduced amount of the liquid functional agent, or in the absence of the liquid functional agent altogether.

With a melting temperature reduction, a substantial viscosity reduction associated with the melting event will occur at a lower temperature within the patterned region, resulting in an increased coalescence rate within the patterned region compared to a non-patterned region when above the modified melting temperature of the patterned region. This is due to the increase in coalescence rate which occurs with a decreased viscosity as coalescence rate is proportional to the surface tension divided by the viscosity. An increase in the coalescence rate can decrease the processing time as well as enhance selectivity between the patterned and non-patterned regions.

The melt flow property reduction agent may be used to form the 3D part at lower temperatures than typical processing temperatures, to modify the part properties and/or the degree of fusion within the part, and/or as a detailing agent to treat surfaces and/or edges of the part.

Various examples of the method are described in reference to Figs. 1A and 1B, Figs. 1A and 1C-1E, and Figs. 1A, 1C, 1D, 1F, and 1G. Each of the methods utilizes a printing system 10. The printing system 10 includes a build area platform 12, a build material supply 14 containing crystalline or semi-crystalline build material 16, and a build material distributor 18. It is to be understood that the 3D printing system 10 may include additional components and that some of the components described herein may be removed and/or modified. Furthermore, components of the printing system 10 depicted in Figs. 1A-1G may not be drawn to scale and thus, the printing system 10 may have a different size and/or configuration other than as shown therein.

Each of the physical elements of the printing system 10 may be operatively connected to a controller 26 of the printing system 10. The controller 26 may control the operations of the build area platform 12, the build material supply 14, the build material distributor 18, and an inkjet applicator(s) 30, 30' (shown in Fig. 1B). As an example, the controller 26 may control actuators (not shown) to control various operations of the 3D printing system 10 components. The controller 26 may be a computing device, a semiconductor-based microprocessor, a central processing unit (CPU), an application specific integrated circuit (ASIC), and/or another hardware device. Although not shown, the controller 26 may be connected to the 3D printing system 10 components via communication lines.

The controller 26 manipulates and transforms data, which may be represented as physical (electronic) quantities within the printer's registers and memories, in order to control the physical elements to create the 3D part. As such, the controller 26 is depicted as being in communication with a data store 28. The data store 28 may include data pertaining to a 3D part to be printed by the 3D printing system 10. The data for the selective delivery of the crystalline or semi-crystalline build material 16, the melt flow property reduction agent 32 (shown in Fig. 1B), etc. may be derived from a model of the 3D part to be formed. For instance, the data may include the locations on a particular layer of the crystalline or semi-crystalline build material 16 that the inkjet applicator 30 is to deposit the melt flow property reduction agent 32. The data store 28 may also include machine readable instructions (stored on a non-transitory computer readable medium) that are to cause the controller 26 to control the amount of the crystalline or semi-crystalline build material 16 that is supplied by the build material supply 14, the movement of the build area platform 12, the movement of the build material distributor 18, the movement of the inkjet applicator(s) 30, 30', etc.

The printing system 10 will be further described throughout the description of the various examples of the method.

Referring now to Figs. 1A and 1B, one example of the 3D printing method is depicted. As shown in Fig. 1A, the method includes applying the crystalline or semi-crystalline build material 16.

The crystalline or semi-crystalline build material 16 may be crystalline or semi-crystalline polymers in powder form. Examples of crystalline or semi-crystalline polymers include semi-crystalline thermoplastic materials with a wide processing window of greater than 5°C (i.e., the temperature range between the melting point and the re-crystallization temperature). Some specific examples of the semi-crystalline thermoplastic materials include polyamides (PAs) (e.g., PA 11 / nylon 11, PA 12 / nylon 12, PA 6 / nylon 6, PA 8 / nylon 8, PA 9 / nylon 9, PA 66 / nylon 66, PA 612 / nylon 612, PA 812 / nylon 812, PA 912 / nylon 912, etc.). Other examples of crystalline or semi-crystalline polymers suitable for use as the build material 16 include polyethylene, polypropylene, and polyoxomethylene (i.e., polyacetals).

The crystalline or semi-crystalline build material 16 may also be a metal build material in particulate form. Examples of the metal build material include copper (Cu), zinc (Zn), niobium (Nb), tantalum (Ta), silver (Ag), gold (Au), platinum (Pt), palladium (Pd), indium (In), bismuth (Bi), tin (Sn), lead (Pb), gallium (Ga), and alloys thereof. While more costly, osmium (Os), rhodium (Rh), ruthenium (Ru), and iridium (Ir) may also be used.

The crystalline or semi-crystalline build material 16 may also be a hydrocarbon wax build material in particulate form. Examples of the hydrocarbon wax build material include paraffin wax (C₃₄H₇₀) or hydrocarbon waxes having 40 or more carbon atoms.

The crystalline or semi-crystalline build material 16 consists of the polymer, metal, or hydrocarbon wax material, and does not include fillers, adhesive materials, etc.

The crystalline or semi-crystalline build material 16 is associated with a melting point/temperature (Tₘ), which may also refer to a temperature at which the material 16 begins to coalesce rapidly. As examples, this temperature may range from about 50°C to about 2000°C. This range may vary, depending upon the crystalline or semi-crystalline build material 16 that is used. As examples, the polymeric build material may be a polyamide having a melting point of 180°C, or the metal build material may be indium having a melting point of about 157°C, or the hydrocarbon wax build material may be paraffin wax (C₃₄H₇₀) having a melting point of about 74°C.

The crystalline or semi-crystalline build material 16 is associated with a viscosity. The viscosity of the build material 16 is generally not measurable before melting, but may be very high. The viscosity may be relatively low, e.g., from about 10⁴ (1(E)4) mPa.s (10⁴ (1E4) centipoise) to about 10⁸ (1E8) mPa.s (10⁸ (1E8) centipoise) after melting.

The crystalline or semi-crystalline build material 16 may have a particle size ranging from about 10 µm to about 200 µm. In another example, the particle size ranges from about 20 µm to about 150 µm. With regard to the build material 16, the particle size generally refers to the diameter or average diameter of the crystalline or semi-crystalline build material 16, which may vary, depending upon the morphology of the individual particles. In an example, a respective build material particle may have a morphology that is substantially spherical. A substantially spherical build material 16 (i.e., spherical or near-spherical) has a sphericity of >0.84. Thus, any individual particles having a sphericity of <0.84 are considered non-spherical (irregularly shaped). The particle size of the substantially spherical particle may be provided by its largest diameter, and the particle size of a non-spherical particle may be provided by its average diameter (i.e., the average of multiple dimensions across the build material particle) or by an effective diameter, which is the diameter of a sphere with the same mass and density as the non-spherical particle.

As shown in Fig. 1A, the build area platform 12 receives the build material 16 from the build material supply 14. The build area platform 12 may be integrated with the printing system 10 or may be a component that is separately insertable into the printing system 10. For example, the build area platform 12 may be a module that is available separately from the printing system 10. The build material platform 12 is shown as a fabrication/print bed. It is to be understood that this is one example, and could be replaced with another support member, such as a platen, a glass plate, or another build surface.

The build area platform 12 may be moved in a direction as denoted by the arrow 20, e.g., along the z-axis, so that the crystalline or semi-crystalline build material 16 may be delivered to the platform 12 or to a previously formed layer of the 3D part (see Fig. 1F). In an example, when the crystalline or semi-crystalline build material 16 is to be delivered, the build area platform 12 may be programmed to advance (e.g., downward) enough so that the build material distributor 18 can push the crystalline or semi-crystalline build material 16 onto the platform 12 to form a layer of the crystalline or semi-crystalline build material 16 thereon. The build area platform 12 may also be returned to its original position, for example, when a new part is to be built.

The build material supply 14 may be a container, bed, or other surface that is to position the crystalline or semi-crystalline build material 16 between the build material distributor 18 and the build area platform 12. In some examples, the build material supply 14 may include a surface upon which the crystalline or semi-crystalline build material 16 may be supplied, for instance, from a build material source (not shown) located above the build material supply 14. Examples of the build material source may include a hopper, an auger conveyer, or the like. Additionally, or alternatively, the build material supply 14 may include a mechanism (e.g., a delivery piston 22) to provide, e.g., move, the crystalline or semi-crystalline build material 16 from a storage location to a position to be spread onto the build area platform 12 or onto a previously formed layer of the 3D part.

The build material distributor 18 may be moved in a direction as denoted by the arrow 23, e.g., along the y-axis, over the build material supply 14 and across the build area platform 12 to spread a layer of the crystalline or semi-crystalline build material 16 over the build area platform 12. The build material distributor 18 may also be returned to a position adjacent to the build material supply 14 following the spreading of the crystalline or semi-crystalline build material 16. The build material distributor 18 may be a blade (e.g., a doctor blade), a roller (as shown in Fig. 1A), a combination of a roller and a blade, and/or any other device capable of spreading the build material granules 16 over the build area platform 12. For instance, the build material distributor 18 may be a counter-rotating roller.

As shown in Fig. 1A, the method also includes maintaining a temperature of the crystalline or semi-crystalline build material 16 within 100°C below the melting/coalescing temperature (Tₘ) of the material 16. In other words, the temperature of the crystalline or semi-crystalline build material 16 is heated to a temperature below the melting/coalescing temperature (Tₘ), which may be as low as 100°C below the melting/coalescing temperature (Tₘ). In some examples (e.g., when a liquid functional agent is not used in combination with the melt flow property reducing agent), the temperature of the crystalline or semi-crystalline build material 16 may be as low as 50°C below the melting/coalescing temperature (Tₘ).

Heating the build material 16, and then maintaining the temperature of the build material 16 within 100°C below the melting/coalescing temperature (Tₘ) of the material 16 may be accomplished using any suitable heater 24. As shown in Fig. 1A, the heater 24 is an overhead heating lamp, such as an ultraviolet (UV), infrared (IR) or near-IR curing lamp, light emitting diodes (LED) or LED arrays, flash lamps, or visible light sources. As an example, the heater 24 may emit blackbody radiation with a maximum intensity at a wavelength of about 1100 nm. The heater 24 may also be integrated into the build area platform 12. Thermometers, temperature sensors, ultraviolet (UV), infrared (IR) or near-IR sensors, etc. may be used in conjunction with the heater 24 in order to maintain the crystalline or semi-crystalline build material 16 at the suitable temperature.

In the example method shown in Figs. 1A and 1B, after the crystalline or semi-crystalline build material 16 is applied and the temperature of the crystalline or semi-crystalline build material 16 is maintained, the melt flow property reduction agent 32 is selectively applied on at least a portion 38 of the crystalline or semi-crystalline build material 16 (as shown in Fig. 1B). As illustrated in Fig. 1B, the melt flow property reduction agent 32 may be dispensed from the inkjet applicator 30.

The melt flow property reduction agent 32 includes a component that reduces the melting/coalescing temperature (Tₘ) of the material 16. Examples of this component include: a solvent which becomes at least partially mixed, or in some instances forms a miscible solution, with the crystalline or semi- crystalline build material 16 at the maintained temperature of the material 16; or a liquid eutectic alloy; or a mercury amalgam; or a nanoparticle dispersion including metal nanoparticles therein; or a liquid hydrocarbon. The component of the melt flow property reduction agent 32 that is used will depend, in part, on the crystalline or semi- crystalline build material 16.

When the crystalline or semi-crystalline build material 16 is the polymeric build material, the melt flow property reduction agent 32 includes or is the solvent which at least partially mixes with, or forms a miscible solution with the polymeric build material at the maintained temperature of the polymeric build material. In addition to being highly miscible with the polymeric build material at the maintained temperature, the solvent can also partly solvate the polymeric build material. Examples of the solvent include 2-pyrrolidone, N-2-hydroxyethyl-2-pyrrolidone, N-methyl-2-pyrrolidone (i.e., N-methyl-pyrrolidone), urea, ethylene carbonate, propylene carbonate, lactones, diethylene glycol, triethylene glycol, tetraethylene glycol, methyl 4-hydroxybenzoate, dimethyl sulfoxide, dioctyl phthalate, decalin, gamma-butyrolactone, dimethylformamide, and phenylmethanol. Specific polymeric build material and solvent combinations include: polyamide and any one of 2-pyrrolidone, N-2-hydroxyethyl-2-pyrrolidone, N-methyl-2-pyrrolidone, urea, ethylene carbonate, propylene carbonate, lactones, diethylene glycol, triethylene glycol, tetraethylene glycol, methyl 4-hydroxybenzoate, dimethyl sulfoxide, and dioctyl phthalate; or polypropylene or polyethylene and decalin; or polyoxomethylene and any one of N- methyl pyrrolidone, gamma-butyrolactone, dimethylformamide, and phenylmethanol.

In an example, the solvent is present in the melt flow property reduction agent 32 in an amount ranging from about 5 wt% to about to about 100 wt% based on the total wt% of the melt flow property reduction agent 32. The amount of solvent will depend, in part, on the type of solvent and the printing technique used to jet the melt flow property reduction agent 32. For example, some solvents may be printed at 100 wt% using thermal inkjet printing (e.g., DMSO), while others may be printed at 100 wt% using piezoelectric inkjet printing (e.g., 2-pyrrolidone). Alternatively, some solvents are printable via thermal inkjet printing and/or piezoelectric printing when present in an amount less than 100% (e.g., 80% or less). In some examples, the solvent is present in the melt flow property reduction agent 32 in an amount ranging from about 40 wt% to about 70 wt %, and the agent 32 also include at least 30 wt% water.

The amount of solvent in the melt flow property reduction agent 32 may dictate how much of the melt flow property reduction agent 32 is dispensed on the polymeric build material, because the ratio of the solvent to the build material 16 should be sufficient to create a local melting point depression within the polymeric build material. For example, the melting point reduction will be similar for an agent 32 including 40 wt% 2-pyrrolidone printed at 12 ng/236^{th} of a cm (12 ng/600^{th} of an inch) of polymer build material and for an agent 32 including 10 wt% 2-pyrrolidone printed at 48 ng/ 236^{th} of a cm (48 ng/600^{th} of an inch) of polymer build material (minus any evaporative losses incurred due to slower printing speeds or extra swaths to put down the elevated flux).

The melt flow property reduction agent 32, which includes the solvent, may also include water alone, or water in combination with a liquid vehicle. The liquid vehicle may include co-solvents(s), surfactant(s), dispersant(s), antimicrobial agent(s), anti-kogation agent(s), chelating agent(s), humectant(s), water, and combinations thereof. In some instances, pH adjusters or buffers may also be included in the agent 32.

In an example, the melt flow property reduction agent 32 (including the solvent) may also include a co-solvent. Co-solvents may be present in an amount ranging from about 5 wt% to about 25 wt% based on the total wt% of the melt flow property reduction agent 32. Examples of co-solvents include pyrrolidones and alcohols. As one example, the co-solvents in the agent 32 include 2-pyrrolidone, 1,6-hexanediol, and N-2-hydroxyethyl-2-pyrrolidone.

Surfactant(s) may be used in the melt flow property reduction agent 32, which includes the solvent, to quickly wet the polymeric build material. As an example, the melt flow property reduction agent 32 may include non-ionic, cationic, and/or anionic surfactants, which may be present in an amount ranging from about 0.01 wt% to about 5 wt% based on the total wt% of the melt flow property reduction agent 32. In at least some examples, the melt flow property reduction agent 32 may include a silicone-free alkoxylated alcohol surfactant such as, for example, TEGO^{®} Wet 510 (EvonikTegoChemie GmbH) and/or a self-emulsifiable wetting agent based on acetylenic diol chemistry, such as, for example, SURFYNOL^{®} SE-F (Air Products and Chemicals, Inc.). Other suitable commercially available surfactants include SURFYNOL^{®} 465 (ethoxylatedacetylenic diol), SURFYNOL^{®} CT-211 (now CARBOWET^{®} GA-211, non-ionic, alkylphenylethoxylate and solvent free), and SURFYNOL^{®} 104 (non-ionic wetting agent based on acetylenic diol chemistry), (all of which are from Air Products and Chemicals, Inc.); CAPSTONE^{®} FS-35 (a non-ionic fluorosurfactant from Dupont); TERGITOL^{®} TMN-3 and TERGITOL^{®} TMN-6 (both of which are branched secondary alcohol ethoxylate, non-ionic surfactants), TERGITOL^{®} 15-S-3, TERGITOL^{®} 15-S-5, and TERGITOL^{®} 15-S-7 (each of which is a secondary alcohol ethoxylate, non-ionic surfactant) (all of the TERGITOL^{®} surfactants are available from The Dow Chemical Co.); DOWFAX^{™} 2A1 or DOWFAX^{™} 8390 (anionic surfactants available from The Dow Chemical Co.); and POLYFOX^{™} (e.g., POLYFOX^{™} PF-154N and other fluorosurfactants available from Omnova Solutions).

An example of a suitable dispersant is a polyacrylic acid polymer (e.g., commercially available as CARBOSPERSE^{™} K-7028 Polyacrylate from Lubrizol). The amount of dispersant may range from about 0.01 wt% to about 5 wt% based on the total wt% of the melt flow property reduction agent 32.

The melt flow property reduction agent 32, which includes the solvent, may also include antimicrobial agent(s). Suitable antimicrobial agents include biocides and fungicides. Example antimicrobial agents may include the NUOSEPT^{®} (Ashland Inc.), UCARCIDE^{™} or KORDEK^{™} (Dow Chemical Co.), and PROXEL^{®} (Arch Chemicals) series, ACTICIDEO M20 (Thor), and combinations thereof. In an example, the melt flow property reduction agent 32 may include a total amount of antimicrobial agents that ranges from about 0.1 wt% to about 0.25 wt%.

When the melt flow property reduction agent 32, including the solvent, is to be applied via thermal inkjet applications, an anti-kogation agent may also be included. Kogation refers to the deposit of dried ink on a heating element of a thermal inkjet printhead. Anti-kogation agent(s) is/are included to assist in preventing the buildup of kogation. Examples of suitable anti-kogation agents include oleth-3-phosphate (commercially available as CRODAFOS^{™} O3A or CRODAFOS^{™} N-3 acid) and dextran 500k. Other suitable examples of the anti-kogation agents include CRODAFOS^{™} HCE (phosphate-ester from Croda Int.), CRODAFOS^{®} N10 (oleth-10-phosphate from Croda Int.), or DISPERSOGEN^{®} LFH (polymeric dispersing agent with aromatic anchoring groups, acid form, anionic, from Clariant), etc. The anti-kogation agent may be present in the melt flow property reduction agent 32 in an amount ranging from about 0.01 wt% to about 1 wt% of the total wt% of the melt flow property reduction agent 32.

The melt flow property reduction agent 32 (including the solvent) may also include a chelating agent. Examples of suitable chelating agents include disodium ethylenediaminetetraacetic acid (EDTA-Na) and methylglycinediacetic acid (e.g., TRILON^{®} M from BASF Corp.). Whether a single chelating agent is used or a combination of chelating agents is used, the total amount of chelating agent(s) in the melt flow property reduction agent 32 may range from 0 wt% to about 1 wt% based on the total wt% of the melt flow property reduction agent 32.

Humectant(s) may be used in the melt flow property reduction agent 32, which includes the solvent. An example of a suitable humectant is LIPONIC^{®} EG-1 (glycereth-26, available from Lipo Chemicals). The humectant may be added in an amount ranging from about 0.25 wt% to about 1 wt% based on the total wt% of the melt flow property reduction agent 32.

A pH adjusting agent may also be used to adjust the pH of the melt flow property reduction agent 32. In an example, the pH ranges from about 7.5 to about 9.0. In another example, the pH ranges from about 8.0 to about 8.5. In other examples, buffers may be used. An example of a suitable buffer is MOPS (3-(/V-morpholino)propanesulfonic acid), and an example of a suitable amount of the buffer ranges from about 0.1 wt% to about 0.2 wt%.

The balance of the melt flow property reduction agent 32, including the solvent, is water. As such, the amount of water may vary depending upon the weight percent of the other melt flow property reduction agent components. In an example, the amount of water is at least 30 wt%. The water may be deionized water.

In some examples, the components of the liquid vehicle may be mixed together, and then mixed with the solvent, or with water and the solvent to obtain the final melt flow property reduction agent 32. In these examples, the liquid vehicle may or may not include water. When the liquid vehicle does not include water, the amount of water added as the balance of the melt flow property reduction agent 32 will depend upon the amount of solvent being used and the desired weight percentages for liquid vehicle components in the final melt flow property reduction agent 32. When the liquid vehicle does include water (e.g., in an amount up to 50 wt% of the liquid vehicle), the amount of water added as the balance of the melt flow property reduction agent 32 will depend upon the amount of solvent being used, the amount of water present in the liquid vehicle, and the desired weight percentages for liquid vehicle components in the final melt flow property reduction agent 32.

An example of the melt flow property reduction agent 32, including the solvent, includes about 7 wt% methyl 4-hydroxybenzoate (as the solvent), about 46 wt% of the liquid vehicle (i.e., surfactant(s), dispersant(s) antimicrobial agent(s), anti-kogation agent(s), chelating agent(s), humectant(s), water, and combinations thereof), and about 46 wt% water (in addition to any water present in the liquid vehicle). Another example of the melt flow property reduction agent 32, including the solvent, includes about 40 wt% 2-pyrrolidone (as the solvent), about 20 wt% of the liquid vehicle, and about 40 wt% water (in addition to any water present in the liquid vehicle). Still another example of the melt flow property reduction agent 32, including the solvent, includes about 40 wt% dimethyl sulfoxide (as the solvent), about 20 wt% of the liquid vehicle, and about 40 wt% water (in addition to any water present in the liquid vehicle).

Other examples of the melt flow property reduction agent 32 including the solvent also include a colorant. The colorant may be any suitable pigment or dye. An example of a suitable pigment includes carbon black, which may also improve the mechanical properties of the 3D part that is formed. Examples of suitable dyes include Acid Red 52 (Acid Red 52, Na salt), Magenta 377 (M377), yellow dye Y1189-Na, Acid Yellow 17 (Acid Yellow 17, Na salt), Acid Blue 9, phthalocyanine colorant (e.g., C.I. Direct Blue 199, which is an ammonium, lithium or sodium salt of copper phthalocyanine-sulfonic acid, C854-Na, which is a phthalocyanine dye, sodium salt), PRO-JET^{®} cyan, magenta, and yellow products from FujiFilm Industrial Colorants, DUASYN^{®} products from Clariant, or the like. When included, the colorant may range from about 1 wt% to about 6 wt% based on the total wt% of the melt flow property reduction agent 32. As examples, about 5 wt% of carbon black may be included, or about 2 wt% Acid Red 52 may be included, or about 4 wt% of C.I. Direct Blue 199 may be included.

Carbon black may also function as a radiation absorber. As such, some examples of the melt flow property reduction agent 32 include the radiation absorber, which enhances the absorption of applied radiation, and therefore heats the build material 16 in contact therewith faster than when the radiation absorber is not present. Examples of other suitable radiation absorbers include those listed hereinbelow for the liquid functional agent 34. In these examples, the melt flow reduction agent 32 both reduces the melting point of the build material 16 and improves heating of the build material 16 by enhancing the absorption of the applied radiation.

Yet further examples of the melt flow property reduction agent 32 including the solvent also include a resin. An example resin is JONCRYL^{®} 683 from BASF Corp. The resin may be present in an amount ranging from about 0.5 wt% to about 2 wt%. The resin may improve the jettability and/or reliability of the applicators 30, 30'. An example of this melt flow property reduction agent 32 may include about 5 wt% dioctyl phthalate (as the solvent), about 1 wt% of the resin, about 20 wt% of the liquid vehicle, and about 70 wt% water (in addition to any water present in the liquid vehicle).

When the crystalline or semi-crystalline build material 16 is the metal build material, the melt flow property reduction agent 32 includes or is the liquid eutectic alloy, the mercury amalgam, or the nanoparticle dispersion (having metal nanoparticles therein).

The components of the liquid eutectic alloy will depend upon the metal build material. One of the elements in the liquid eutectic alloy is the same as the metal build material and the other of the elements in the liquid eutectic alloy is a metal having a lower melting point than the melting point of the metal build material. As such, any of the previously listed metal build materials may be included in the eutectic alloy. As an example, the metal build material may be indium and the liquid eutectic alloy may be an indium-gallium liquid eutectic alloy including about 16 atomic% of indium and about 86 atomic% of gallium. Other examples of the liquid eutectic alloy include bismuth (50 atomic%), lead (25 atomic%), and tin (25 atomic%) or bismuth (32.5 atomic%), indium (51 atomic%), and tin (25 atomic%).

The mercury amalgam is a mixture of liquid mercury and a metal alloy. Any naturally occurring metal can form an amalgam with mercury, except for iron, platinum, tungsten, and tantalum.

The components of the nanoparticle dispersion will depend upon the metal build material. The nanoparticle dispersion is a water-based dispersion that includes nanoparticles formed of the same metal as the metal build material. As such, any of the metals listed for the build material 16 may be used as the nanoparticles. The nanoparticles, having a particle size ≤ 5 nm, are significantly smaller than the metal build materials, and have higher surface energies and lower melting points than the metal build materials. The nanoparticle dispersion may include any of the components of the liquid vehicle disclosed herein, and may also include a polymeric stabilizer (e.g., JONCRYL^{®} resins from BASF Corp.) and a reducing agent (e.g., ascorbic acid). When the nanoparticle dispersion is to be printed via a piezoelectric inkjet applicator 30, it may be desirable to use a non-polar solvent with the nanoparticles alone, due in part to the potential for surface oxidation in the presence of water.

When the crystalline or semi-crystalline build material 16 is the hydrocarbon wax build material, the melt flow property reduction agent 32 is the liquid hydrocarbon. Examples of the liquid hydrocarbon include C10 to C14 carbons, such as decane, dodecane, tetradecane, etc.

As mentioned above, the melt flow property reduction agent 32 may be dispensed from the inkjet applicator 30. The inkjet applicator 30 may be scanned across the build area platform 12 in the direction indicated by the arrow 36, e.g., along the y-axis. The inkjet applicator 30 may be, for instance, a thermal inkjet printhead, a piezoelectric printhead, etc., and may extend a width of the build area platform 12. While a single inkjet applicator 30 is shown in Fig. 1B, it is to be understood that multiple inkjet applicators 30 may be used that span the width of the build area platform 12. Additionally, the inkjet applicators 30 may be positioned in multiple printbars. The inkjet applicator 30 may also be scanned along the x-axis, for instance, in configurations in which the inkjet applicator 30 does not span the width of the build area platform 12 to enable the inkjet applicator 30 to deposit the melt flow property reduction agent 32 over a large area of a layer of the crystalline or semi-crystalline build material 16. The inkjet applicator 30 may thus be attached to a moving XY stage or a translational carriage (neither of which is shown) that moves the inkjet applicator 30 adjacent to the build area platform 12 in order to deposit the melt flow property reduction agent 32 in predetermined areas 38 of the layer of the crystalline or semi-crystalline build material 16 that has been formed on the build area platform 12 in accordance with the method(s) disclosed herein. The inkjet applicator 30 may include a plurality of nozzles (not shown) through which the melt flow property reduction agent 32 is to be ejected.

The controller 26 may execute instructions to control the inkjet applicator 30 (e.g., in the directions indicated by the arrow 36) to deposit the melt flow property reduction agent 32 onto predetermined portion(s) 38 of the build material 16 that are to become part of the 3D part that is to be formed. The inkjet applicator 30 may be programmed to receive commands from the controller 26 and to deposit the melt flow property reduction agent 32 according to a pattern of a cross-section for the layer of the 3D part that is to be formed. As used herein, the cross-section of the layer of the 3D part to be formed refers to the cross-section that is parallel to the surface of the build area platform 12. In the example shown in Fig. 1B, the inkjet applicator 30 selectively applies the melt flow property reduction agent 32 on those portion(s) 38 of the build material 16 that are to be fused to become the first layer of the 3D part. As an example, if the 3D part that is to be formed is to be shaped like a cube or cylinder, melt flow property reduction agent 32 will be deposited in a square pattern or a circular pattern (from a top view), respectively, on at least a portion of the layer of the build material 16. In the example shown in Fig. 1B, the melt flow property reduction agent 32 is deposited in a square pattern on the portion 38 and not on the portions 40.

When the melt flow property reduction agent 32 includes the solvent, the inkjet applicator 30 may be a thermal inkjet printhead or a piezoelectric inkjet printhead, depending upon the composition of the agent 32. The amount of melt flow property reduction agent 32 (including the solvent) that is dispensed by the inkjet applicator 30 onto the crystalline or semi-crystalline build material 16 is sufficient to create the local melting point depression. The amount that is dispensed may be determined by ink flux (i.e., agent 32 to build material 16 ratio) or by the mass loading of the solvent (in the agent 32) on the build material 16. The ink flux may range from about 18 picoliters of agent 32 per 236^{th} of a cm (18 picoliters of agent 32 per 600^{th} of an inch) of build material 16 to 108 picoliters of agent 32 per 236^{th} of a cm (108 picoliters of agent 32 per 600^{th} of an inch) of build material 16. The mass loading is a mass fraction of the solvent to the solvent plus the crystalline or semi-crystalline build material 16. The mass fraction may range from about 0.1 to about 0.9. Table 1 below illustrates several examples of suitable combinations of solvents, build materials, and the mass fraction that is sufficient to create the local melting point depression.

**Table 1**

| **Solvent** | **Build material** | **Mass Fraction** | **Melting Point Depression** |
|---|---|---|---|
| 2-pyrrolidone | PA11, PA12 | 0.1 - 0.9 | 15°C - 40°C |
| N-2-hydroxyethyl-2-pyrrolidone | PA11, PA12 | 0.1 - 0.5 | 10°C - 30°Cz |
| Tetraethylene glycol | PA12 | 0.6 - 0.8 | 16°C - 20°C |
| Methyl 4-hydroxybenzoate | PA 12 | 0.05 - 0.2 | 6°C - 20°C |

When the melt flow property reduction agent 32 includes or is the liquid eutectic alloy or the mercury amalgam, the inkjet applicator 30 may be a thermal inkjet printhead or a piezo electric inkjet printhead. The amount of the liquid eutectic alloy or the mercury amalgam that is dispensed by the inkjet applicator 30 onto the crystalline or semi-crystalline build material 16 is sufficient to create the local melting point depression. In an example, the amount of the liquid eutectic alloy or the mercury amalgam may be sufficient to reduce the atomic percentage of the metal build material to the point that the melting point is depressed below the maintained temperature. To reduce the atomic percentage of the metal build material, the ink flux (i.e. , agent 32 to build material 16 ratio) may be controlled. Eutectic points vary by material, and thus the ink flux may vary significantly for the liquid eutectic alloy. In general, the ink flux of the liquid eutectic alloy or the mercury amalgam may range from about 10 ng/236^{th} cm (10 ng/600^{th} inch) of build material 16 to about 144 ng/236^{th} cm (144 ng/600^{th} inch) of build material 16.

When the melt flow property reduction agent 32 includes or is the nanoparticle dispersion, the inkjet applicator 30 may be a thermal inkjet printhead or a piezoelectric inkjet printhead. The amount of the nanoparticle dispersion that is dispensed by the inkjet applicator 30 onto the crystalline or semi-crystalline build material 16 is sufficient to create the local melting point depression. In an example, the amount of the nanoparticle dispersion may be sufficient to depress the melting point below the maintained temperature. To depress the melting point, the ink flux (i.e., agent 32 to build material 16 ratio) may be controlled. The ink flux may vary significantly for the different nanoparticles. In general, the ink flux of the nanoparticle dispersion may range from about 10 ng/236^{th} cm (10 ng/600th inch) of build material 16 to about 144 ng/236^{th} cm (144 ng/600^{th} inch) of build material 16.

In the example shown in Fig. 1B, the melt flow property reduction agent 32 is applied in an amount sufficient to create the local melting point depression, and thus the build material 16 in the portion 38 in contact with the melt flow property reduction agent 32 melts or coalesces at the maintained temperature. As such, no additional heating is utilized. The build material 16 in the portion 38 then cures (e.g., binds, fuses, sinters, etc.) to form a 3D part layer 42.

Additional layers of the 3D part may be formed by repeating the processes of Figs. 1A and 1B. For example, to form an additional layer of the 3D part, an additional layer of the crystalline or semi-crystalline build material 16 may be applied to the 3D part layer 42. The temperature of the additional layer of the crystalline or semi-crystalline build material 16 may be elevated to the maintained temperature, and then a sufficient amount of the melt flow property reduction agent 32 is applied to those portion(s) 38 of the additional build material 16. The build material 16 in contact with the melt flow property reduction agent 32 melt or coalesce to form the next 3D part layer. When the 3D part is complete, it may be removed from the printing system 10, and any non-bound, non-uncured build material 16 may be removed, and in some instances reused.

Together, Figs. 1A and 1B also illustrate another example of the method, in which a liquid functional agent 34 is deposited (by an inkjet applicator 30') on the portion(s) 38 of the build material 16 with the melt flow property reduction agent 32.

Examples of the liquid functional agent 34 are water-based dispersions including a radiation absorbing binding agent (i.e., an active material).

One example of a suitable active material is PEDOTPSS (poly(3,4-ethylenedioxythiophene) polystyrene sulfonate).

The active material may also be any electromagnetic radiation absorbing colorant. In an example, the active material is a near infrared light absorber. Any near infrared colorants, e.g., those produced by Fabricolor, Eastman Kodak, or Yamamoto, may be used in the liquid functional agent 34. As one example, the liquid functional agent 34 may be an ink formulation including carbon black as the active material.
Examples of this ink formulation are commercially known as CM997A, 516458, C18928, C93848, C93808, or the like, all of which are available from HP Inc.

As another example, the liquid functional agent 34 may be an ink formulation including near infrared absorbing dyes as the active material. Examples of this ink formulation are described in U.S. Patent No. 9, 133,344. Some examples of the near infrared absorbing dye are water soluble near infrared absorbing dyes selected from the group consisting of: 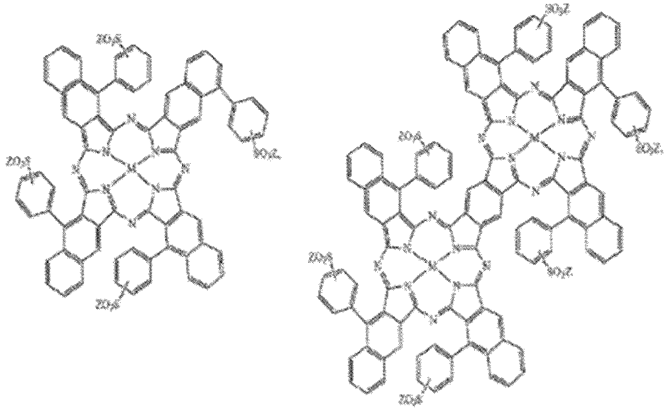 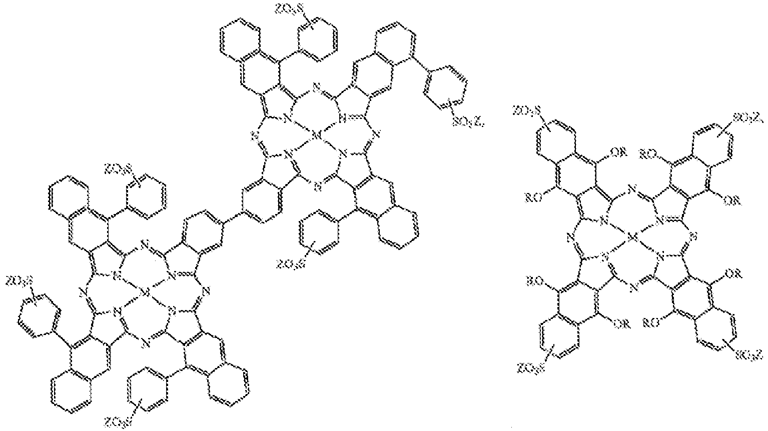 and mixtures thereof. In the above formulations, M can be a divalent metal atom (e.g., copper, etc.) or can have OSO₃Na axial groups filling any unfilled valencies if the metal is more than divalent (e.g., indium, etc.), R can be any C1-C8 alkyl group (including substituted alkyl and unsubstituted alkyl), and Z can be a counterion such that the overall charge of the near infrared absorbing dye is neutral. For example, the counterion can be sodium, lithium, potassium, NH₄⁺, etc.

Some other examples of the near infrared absorbing dye are hydrophobic near infrared absorbing dyes selected from the group consisting of: 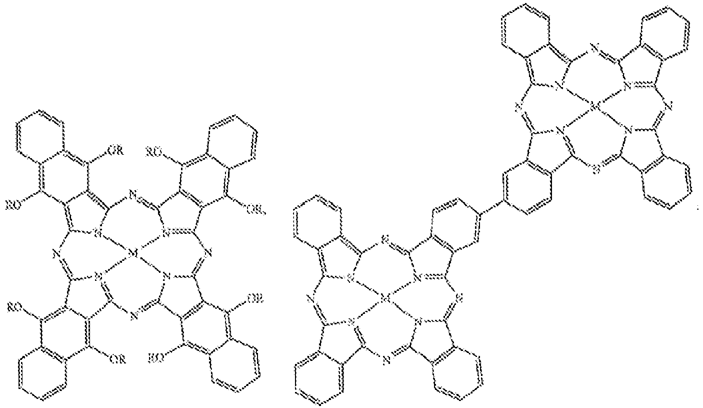 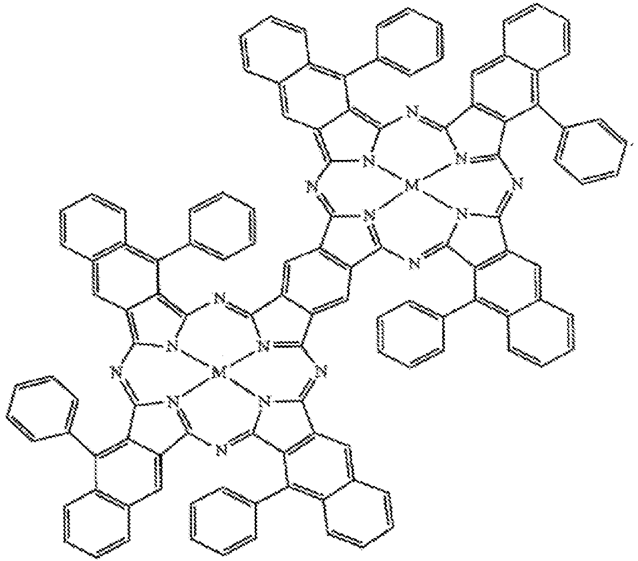 and mixtures thereof. For the hydrophobic near infrared absorbing dyes, M can be a divalent metal atom (e.g., copper, etc.) or can include a metal that has Cl, Br, or OR' (R'=H, CH₃, COCH₃, COCH₂COOCH₃, COCH₂COCH₃) axial groups filling any unfilled valencies if the metal is more than divalent, and R can be any C1-C8 alkyl group (including substituted alkyl and unsubstituted alkyl).

The amount of the active material that is present in the liquid functional agent 34 ranges from greater than 0 wt% to about 40 wt% based on the total wt% of the liquid functional agent 34. In other examples, the amount of the active material in the liquid functional agent 34 ranges from about 0.3 wt% to 30 wt%, or from about 1 wt% to about 20 wt%. It is believed that these active material loadings provide a balance between the liquid functional agent 34 having jetting reliability and heat and/or electromagnetic radiation absorbance efficiency.

The aqueous nature of the liquid functional agent 34 enables the liquid functional agent 34 to penetrate, at least partially, into the layer of the build material 16. The build material 16 may be hydrophobic, and the presence of a co-solvent and/or a surfactant in the liquid functional agent 34 may assist in obtaining a particular wetting behavior.

As shown in Fig. 1B, the liquid functional agent 34 may deposited by the inkjet applicator 30' on the portion(s) 38 of the build material 16 that have received or will receive the melt flow property reduction agent 32. The inkjet applicator 30' may be the same as or similar to the inkjet applicator 30, and may be operated in the same manner as previously described for applicator 30.

When used together on the same portion(s) 38, the liquid functional agent 34 and the melt flow property reduction agent 32 may be deposited sequentially or simultaneously. As mentioned above, the melt flow property reduction agent 32 may include the active material of the liquid functional agent. In these instances, the active components of agent 32, 38 are combined, and a separate liquid functional agent 38 may not be used.

When the liquid functional agent 34 is used in the same portion(s) 38 of the build material 16 that have received or will receive the melt flow property reduction agent 32, it is to be understood that the heater 24 used to maintain the temperature of the build material 16 within 100°C below the melting/coalescence temperature may emit radiation that can be absorbed by the active material in the liquid functional agent 34. As such, the active material will enhance the absorption of the radiation, convert the absorbed radiation to thermal energy, and promote the transfer of the thermal heat to the build material 16 in contact therewith. This can heat the build material 16 above the maintained temperature. Since the melt flow property reduction agent 32 creates the local melting point depression and the liquid functional agent 34 sufficiently elevates the temperature of the build material 16, the combination of the two 32, 34 results in faster melting or coalescing at the maintained temperature. Additionally, the maintained temperature may be below the melting/coalescing point depression that occurs because the liquid functional agent 34 can elevate the temperature of the build material 16 to the depressed melting/coalescing temperature. The build material 16 in the portion 38 then cures (e.g., binds, fuses, sinters, etc.) to form a 3D part layer 42.

The combination of the liquid functional agent 34 and the melt flow property reduction agent 32 allows for both deltaT-based fusing (due to the liquid functional agent 34) and chemically modified melting point/viscosity reduction-based fusing (due to the melt flow property reduction agent 32) to occur simultaneously. The combination enables the printing system 10 to be kept at lower than typical 3D printing temperatures, which yields lower energy requirement and less build material caking in/on the build area platform 12.

Additional layers of this example of the 3D part may be formed by repeating the processes of Figs. 1A and 1B. For example, to form an additional layer of the 3D part, an additional layer of the crystalline or semi-crystalline build material 16 may be applied to the 3D part layer 42. The temperature of the additional layer of the crystalline or semi-crystalline build material 16 may be elevated to the maintained temperature, and then a sufficient amount of the melt flow property reduction agent 32 and the liquid functional agent 34 is applied to those portion(s) 38 of the additional build material 16. The build material 16 in contact with the melt flow property reduction agent 32 and the liquid functional agent 34 melt or coalesce to form the next 3D part layer. When the 3D part is complete, it may be removed from the printing system 10, and any non-bound, non-uncured build material 16 may be removed, and in some instances reused.

Referring now to Figs. 1A and 1C through 1E, yet another example of the method is depicted. In this example method, the layer of build material 16 is applied to the build area platform 12, and the temperature of the layer of build material 16 is raised and maintained within 100°C below the melting/coalescing temperature (Tₘ) of the material 16, as previously described. In this example method, raising the temperature of the build material 16 pre-heats the build material 16.

This example of the method then moves to Fig. 1C, where the liquid functional agent 34 is selectively applied (via inkjet applicator 30') to a portion 38 of the build material 16 on the build area platform 12. Since the melt flow property reduction agent 32 is not applied, there is no local melting point depression or viscosity reduction, and thus melting/coalescing does not result at this point. Rather, the liquid functional agent 34 patterns the portion(s) 38 of the build material that is/are to be fused via radiation exposure.

As shown in Fig. 1D, the entire layer of the build material 16 (including the patterned portion 38) is exposed to radiation R. The exposure may be accomplished using the heater 24, as long as the heater emits radiation R that can be absorbed by the liquid functional agent 34 in order to raise the temperature of the build material 16 to its melting/coalescence temperature (Tₘ). In addition to the heater 24 or as an alternate to the heater 24, another suitable radiation source 44 may be used that emits radiation R that can be absorbed by the liquid functional agent 34 in order to raise the temperature of the build material 16 to its melting/coalescence temperature (Tₘ).

The liquid functional agent 34 enhances the absorption of the radiation R, converts the absorbed radiation to thermal energy, and promotes the transfer of the thermal heat to the build material 16 in contact therewith. In an example, the liquid functional agent 34 sufficiently elevates the temperature of the build material 16 above the melting point(s), allowing melting/coalescing and curing (e.g., sintering, binding, fusing, etc.) of the build material 16 in contact with the liquid functional agent 34 to take place. In this example, exposure to the radiation R forms a portion 46 of the layer 42' (see Fig. 1E) of the 3D object/part. As shown in Fig. 1D, the portions 40 of the build material 16 not exposed to the liquid functional agent 34 do not heat up enough to cure.

The length of time the radiation R is applied for, or energy exposure time, may be dependent, for example, on one or more of: characteristics of the heater 24 and/or radiation source 44; characteristics of the build material 16; and/or characteristics of the liquid functional agent 34.

Referring now to Fig. 1E, the temperature of the non-patterned build material 16 (in portions 40) is allowed to cool or is reheated to within 100°C below the melting/coalescing temperature (Tₘ) of the material 16. The melt flow property reduction agent 32 is then applied to the portions 40 via the inkjet applicator 32. In this example, the portions 40 are at an edge of the layer 42' that is to be formed. The edge may define a perimeter or boarder of the layer 42'.

In the example shown in Fig. 1E, the melt flow property reduction agent 32 is applied in an amount sufficient to create the local melting point depression, and thus the build material 16 in the portions 40 in contact with the melt flow property reduction agent 32 melts or coalesces at the maintained temperature. As such, no additional heating is utilized. The build material 16 in the portions 40 then cures (e.g., binds, fuses, sinters, etc.) to form portions 48, which attach to the portion 46 to form the 3D part layer 42'.

The example shown in Figs. 1A and 1C through 1E uses the melt flow property reduction agent 32 to detail the edges of the part layer 42'. If the melt flow property reduction agent 32 does not include a colorant, the resulting portions 48 provide a color-free, translucent edge to the part layer 42'. If the melt flow property reduction agent 32 does include a colorant, the resulting portions 48 introduce color to the edge of the part layer 42'. Additionally, since the use of the melt flow property reduction agent 32 results in less or no thermal bleed, the edge acuity and smoothness may be improved.

It is to be understood that the melt flow property reduction agent 32 may be applied at other areas within the cross-section of the portion 46 of part layer 42' (either with the liquid functional agent 34 or without the liquid functional agent 34) to vary the color and/or the mechanical properties at specific locations within the part layer 42'. For example, the liquid functional agent 34 and the melt flow property reduction agent 32 may be used together to improve the elongation at break at specific locations within the part layer 42' or the 3D part that is to be formed.

Referring now to Figs. 1A, 1C, 1D, 1F, and 1G, yet another example of the method is depicted. In this example method, the layer of build material 16 is applied to the build area platform 12, and the temperature of the layer of build material 16 is raised and maintained within 100°C below the melting/coalescing temperature (Tₘ) of the material 16, as previously described. In this example method, raising the temperature of the build material 16 pre-heats the build material 16.

This example of the method then moves to Fig. 1C, where the liquid functional agent 34 is selectively applied (via inkjet applicator 30') to the portion 38 of the build material 16 on the build area platform 12. As previously described, since the melt flow property reduction agent 32 is not applied, there is no local melting point depression or viscosity reduction, and thus melting/coalescing does not result at this point. Rather, the liquid functional agent 34 patterns the portion(s) 38 of the build material that is/are to be fused via radiation exposure.

As shown in Fig. 1D, the entire layer of the build material 16 (including the patterned portion 38) is exposed to radiation R as previously described. The liquid functional agent 34 enhances the absorption of the radiation R, converts the absorbed radiation to thermal energy, and promotes the transfer of the thermal heat to the build material 16 in contact therewith. In an example, the liquid functional agent 34 sufficiently elevates the temperature of the build material 16 above the melting point(s), allowing melting/coalescing and curing (e.g., sintering, binding, fusing, etc.) of the build material 16 in contact with the liquid functional agent 34 to take place. In this example, exposure to the radiation R forms the layer 42" (see Fig. 1F) of the 3D object/part. As shown in Fig. 1D, the portions 40 of the build material 16 not exposed to the liquid functional agent 34 do not heat up enough to cure.

Referring now to Fig. 1F, additional build material 16 may be applied to the layer 42". In Fig. 1F, the controller 26 may execute instructions to cause the build area platform 12 to be moved a relatively small distance in the direction denoted by the arrow 20. In other words, the build area platform 12 may be lowered to enable the next layer of build material 16 to be formed. In addition, following the lowering of the build area platform 12, the controller 26 may control the build material supply 14 to supply additional build material 16 (e.g., through operation of the delivery piston 22) and the build material distributor 18 to form another layer of build material 16 on top of the previously formed layer 42".

The newly formed layer of build material 16 may then be heated to within 100°C below the melting/coalescing temperature (Tₘ) of the material 16.

As shown in Fig. 1G, the melt flow property reduction agent 32 is then applied to the portion(s) 38' of the additional build material 16 via the inkjet applicator 32. In this example, the melt flow property reduction agent 32 is used to form a surface layer 50 of the 3D part.

In the example shown in Fig. 1G, the melt flow property reduction agent 32 is applied in an amount sufficient to create the local melting point depression, and thus the build material 16 in the portions 38' in contact with the melt flow property reduction agent 32 melts or coalesces at the maintained temperature. As such, no additional heating is utilized. The build material 16 in the portion(s) 38' then cures (e.g., binds, fuses, sinters, etc.) to form the surface layer 50, which attaches to the 3D part layer 42".

The example shown in Figs. 1A, 1C, 1D, 1F, and 1G uses the melt flow property reduction agent 32 to detail the surface of the 3D part. If the melt flow property reduction agent 32 does not include a colorant, the resulting surface layer 50 provides a color-free, translucent surface on the part layer 42". If the melt flow property reduction agent 32 does include a colorant, the resulting surface layer 50 introduces color to the 3D part surface. Additionally, since the use of the melt flow property reduction agent 32 results in less or no thermal bleed, the surface acuity and smoothness may be improved.

In the resulting 3D parts that are formed, it is to be understood that at least some of the component of the melt flow property reduction agent 32 will remain in the part and may aid in improving the mechanical properties of the part. The components may solidify as the 3D part cools, but generally do not solidify at the heating temperatures disclosed herein or when exposed to radiation.

To further illustrate the present disclosure, examples and prophetic examples are given herein. It is to be understood that these examples and prophetic examples are provided for illustrative purposes and are not to be construed as limiting the scope of the present disclosure.

### EXAMPLES

### Example 1

A layer of polyamide 12 was applied to a test bed. The polyamide was melted via fusing lamps at a temperature of about 182°C.

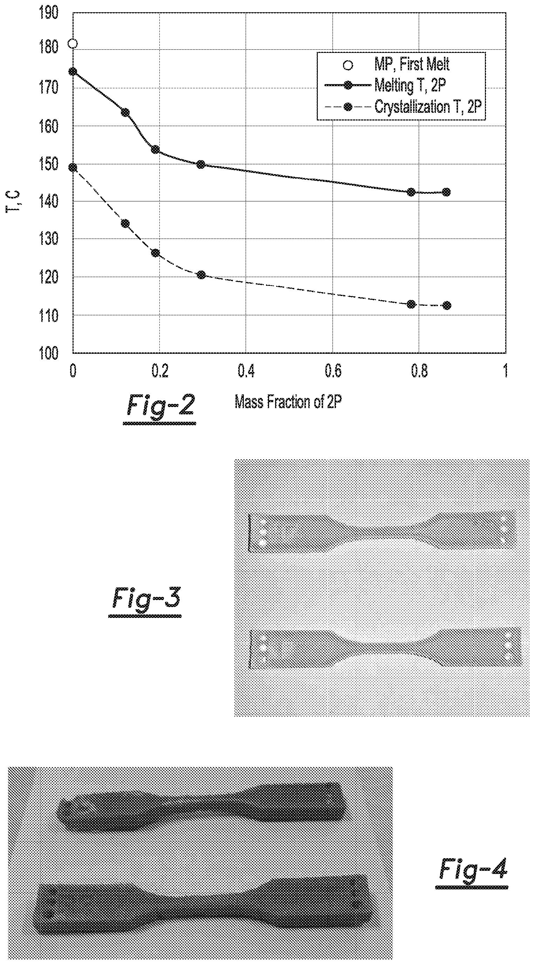

Another layer of polyamide 12 was applied to the test bed. Varied mass fractions of 2-pyrrolidone (from 0.1 to 0.9) were applied to the polyamide 12 layer and the polyamide 12 was exposed to heat via overhead fusing lamps. The temperatures at which the polyamide 12 melted and then recrystallized were recorded. The results are shown in Fig. 2. As depicted, both the melting point and the recrystallization temperatures were depressed with higher mass loadings of the solvent.

### Example 2

3 different melt flow property reduction agents were prepared. The compositions are respectively shown in Tables 2-4.

**TABLE 2 - Colorless melt flow property reduction agent**

| **Ingredient** | **Specific component** | **Formulation Wt%** |
|---|---|---|
| Solvent | 2-pyrrolidone | 66.00 |
| Surfactant | SURFYNOL^{®} SE-F | 0.75 |
| | CAPSTONE^{®} FS-35 | 0.05 |
| Anti-Kogation Agent | CRODAFOS^{®} O3A | 0.05 |
| Dispersant | CARBOSPERSE^{®} 7028 | 0.01 |
| Humectant | LIPONIC^{®} EG-1 | 0.75 |
| Biocide | PROXEL^{®} GXL | 0.18 |
| | KORDEK^{®} MLX | 0.14 |
| Chelating Agent | TRILON^{®} M | 0.04 |
| Water | | balance |

**TABLE 3 - Magenta melt flow property reduction agent**

| **Ingredient** | **Specific component** | **Formulation Wt%** |
|---|---|---|
| Solvent | 2-pyrrolidone | 65.00 |
| Surfactant | SURFYNOL^{®} SE-F | 0.75 |
| | CAPSTONE^{®} FS-35 | 0.05 |
| Anti-Kogation Agent | CRODAFOS^{®} O3A | 0.5 |
| Dispersant | CARBOSPERSE^{®} 7028 | 0.01 |
| Humectant | LIPONIC^{®} EG-1 | 0.75 |
| Biocide | PROXEL^{®} GXL | 0.18 |
| | KORDEK^{®} MLX | 0.14 |
| Chelating Agent | TRILON^{®} M | 0.04 |
| Colorant | Acid Red 52, Na salt | 2.00 |
| Water | | balance |

**TABLE 4 - Cyan melt flow property reduction agent**

| **Ingredient** | **Specific component** | **Formulation Wt%** |
|---|---|---|
| Solvent | 2-pyrrolidone | 65.00 |
| Surfactant | SURFYNOL^{®} SE-F | 0.75 |
| | CAPSTONE^{®} FS-35 | 0.05 |
| Anti-Kogation Agent | CRODAFOS^{®} O3A | 0.5 |
| Dispersant | CARBOSPERSE^{®} 7028 | 0.01 |
| Humectant | LIPONIC^{®} EG-1 | 0.75 |
| Biocide | PROXEL^{®} GXL | 0.18 |
| | KORDEK^{®} MLX | 0.14 |
| Chelating Agent | TRILON^{®} M | 0.04 |
| Colorant | Direct Blue 199, Na salt | 4.00 |
| Water | | Balance |

3D printed parts were produced on a prototype Multi-Jet Fusion printer (i.e., testbed). The testbed had a carriage which contained 4 ink cartridges, and IR fusing lamps attached to either side of the carriages. The powder bed surface was maintained at 160°C.

For the colorless melt flow property reduction agent, a layer of polyamide 12 powder was applied to the testbed. The colorless melt flow property reduction agent was filled into each of the cartridges. Four 9 ng drops of the melt flow property reduction agent was printed per 1/5581 cm² (1/36,000 in²) of polyamide 12. Four passes were used for a single layer, and the colorless melt flow property reduction agent was deposited in a dogbone shape in 3 out of the 4 passes. The IR fusing lamps were on for each of the 4 passes. This formed a single layer. A new layer of polyamide 12 powder was applied and the process was repeated. The colorless parts that were formed are shown in Fig. 3.

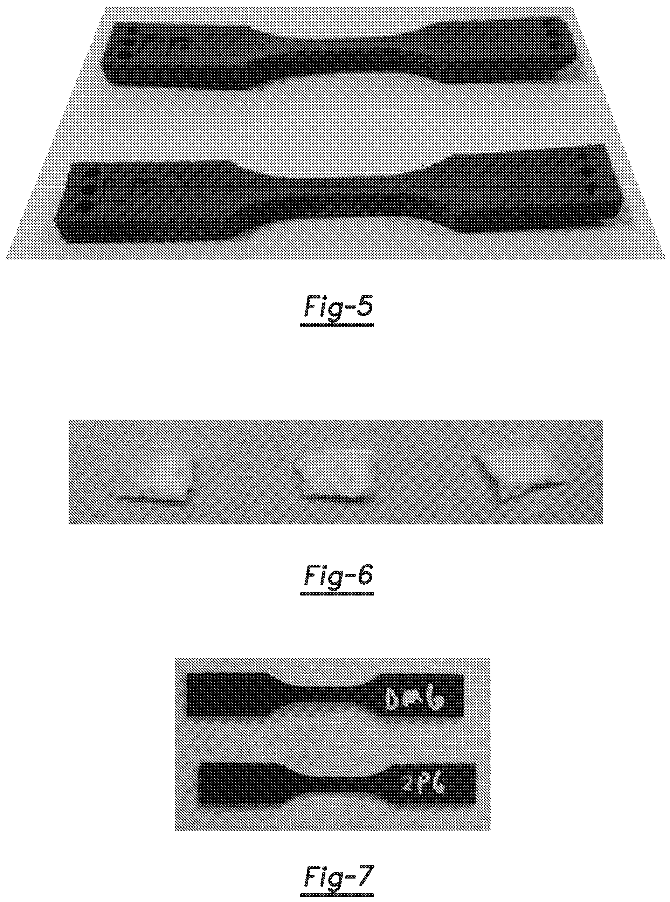

For the magenta and cyan melt flow property reduction agents, a layer of polyamide 12 powder was applied to the testbed. The magenta and cyan melt flow property reduction agents were respectively filled into two of the cartridges (along side two of the cartridges including the colorless melt flow property reduction agent). Two 9 ng drops of the magenta and cyan melt flow property reduction agents were respectively printed per 1/5581 cm² (1/36,000 in²) of polyamide 12 and three 9 ng drops of the colorless melt flow property reduction agent were printed per 1/5581 cm² (1/36,000 in²) of polyamide 12. Four passes were used for a single layer. The agents were deposited in the following sequence for each pass: magenta, colorless, colorless or cyan, colorless, colorless. The IR fusing lamps were on for each of the 4 passes. This formed a single layer. A new layer of polyamide 12 powder was applied and the process was repeated. The colored parts that were formed are shown in black and white in Figs. 4 and 5.

As depicted, solid parts were formed without an additional liquid functional material and without having to additionally heat the patterned build material to the melting point of polyamide 12 (i.e., ~182°C).

### Example 3

A 100 µm (micron) layer of polyamide 12 was applied in a testbed maintained at 160°C. A melt flow property reduction agent was prepared with 7 wt% methyl 4- hydroxybenzoate, and the composition is shown in Table 5.

**TABLE 5 - M4HB Melt flow property reduction agent**

| **Ingredient** | **Specific component** | **Formulation Wt%** |
|---|---|---|
| Solvent | Methyl 4-hydroxybenzoate | 7.00 |
| Co-Solvents | 2-pyrrolidone | 4.6 |
| | 1.6-hexanediol | 8.3 |
| | 1-(2-hydroxyethyl-2-pyrrolidone) | 8.3 |
| Surfactant | SURFYNOL^{®} CT 211 | 0.15 |
| | POLYFOX^{®} PF-154N | 0.74 |
| | DOWFAX^{®} 2A1 | 0.3 |
| Anti-Kogation Agent | CRODAFOS^{®} N3 Acid | 0.35 |
| Buffer | MOPS | 0.17 |
| Biocide | PROXEL^{®} GXL | 0.09 |
| Chelating Agent | EDTA-Na | 0.09 |
| Water | | Balance |

The melt flow property reduction agent was applied to three different areas of the polyamide 12, and was jetted 12 times at 4, 3, or 2 drops per 1/236^{th} of an inch per 100 µm of powder (1 /600th of an inch per 100 microns of powder). As such, three different parts were formed with different weight percentages of the solvent therein. The parts are shown in Fig. 6 (left = 28 wt% methyl 4-hydroxybenzoate, middle = 21 wt% methyl 4-hydroxybenzoate, and right = 14 wt% methyl 4-hydroxybenzoate). These results illustrate that solid parts were formed without an additional liquid functional material and without having to additionally heat the patterned build material to the melting point of polyamide 12 (i.e., ∼182°C).

### Example 4

In this example, a liquid functional agent was used with two different melt flow property reduction agents. A carbon black containing ink was used as the liquid functional agent and the first melt flow property reduction agent included 25 wt% dimethyl sulfoxide and the second flow property reduction agent included 25 wt% 2-pyrrolidone.

**TABLE 6 - DMSO OR 2P Melt flow property reduction agent**

| **Ingredient** | **Specific component** | **Formulation Wt%** |
|---|---|---|
| Solvent | DMSO or 2-pyrrolidone | 25.00 |
| Co-Solvent | 2-pyrrolidone | 8.00 |
| Surfactant | SURFYNOL^{®} SE-F | 0.3 |
| | CAPSTONE^{®} FS-35 | 0.02 |
| Anti-Kogation Agent | CRODAFOS^{®} O3A | 0.2 |
| Dispersant | CARBOSPERSE^{®} 7028 | 0004 |
| Biocide | PROXEL^{®} GXL | 0.072 |
| | KORDEK^{®} MLX | 0.056 |
| Chelating Agent | TRILON^{®} M | 0.016 |
| Water | | balance |

A 100 µm (micron) layer of polyamide 12 was applied in a testbed maintained at 140°C. The liquid functional agent was applied with the first melt flow property reduction agent, and the layer coalesced. The process was repeated to form a first part.

Another 100 µm (micron) layer of polyamide 12 was applied in a testbed maintained at 140°C. The liquid functional agent was applied with the second melt flow property reduction agent, and the layer coalesced. The process was repeated to form a second part.

For each part, the liquid functional agent and the respective melt flow property agents were each jetted 1 time at 4 drops per 1/236^{th} of a cm per 100 µm of powder (4 drops per 1/600^{th} of an inch per 100 microns of powder).

The parts are shown in Fig. 7, with the first part at the top and the second part at the bottom. The dogbone parts were able to be printed at the lower bed temperature (140°C vs 160°C), due to the liquid functional agent raising the temperature of the polyamide 12 and the melt flow property reduction agent reducing the melting/coalescing point of the polyamide 12. The resulting parts had very limited white powder consolidation with no caking of the non-patterned powder and did not exhibit warping of the part during the build or following cooling of the parts.

### Example 5

Two melt flow property reduction agents were prepared. The compositions are shown in Tables 7 and 8.

**TABLE 7 - High solvent loading melt flow property reduction agent (HSL-MFPRA) with carbon black**

| **Ingredient** | **Specific component** | **Formulation Wt%** |
|---|---|---|
| Solvent | 2-pyrrolidone | 45.00 |
| Surfactant | SURFYNOL^{®} SE-F | 0.75 |
| | DOWFAX^{™} 8390 | 0.1 |
| Anti-Kogation Agent | CRODAFOS^{®} O3A | 0.5 |
| | CARBOSPERSE^{®} 7028 | 0.01 |
| Biocide | ACTICIDE^{®} B20 | 0.18 |
| | ACTICIDE ^{®} M20 | 0.14 |
| Chelating Agent | TRILON^{®} M | 0.04 |
| Carbon Black Dispersion | CAB-O-JET^{®} 371KU (Cabot Corp.) | 3.8 |
| Water | | balance |

**TABLE 8 - Low solvent loading melt flow property reduction agent (LSL-MFPRA) with carbon black**

| **Ingredient** | **Specific component** | **Formulation Wt%** |
|---|---|---|
| Solvent | 2-pyrrolidone | 19.00 |
| | Triethylene glycol | 8.00 |
| Surfactant | TEGOWET^{®} 510 | 0.75 |
| Anti-Kogation Agent | CRODAFOS^{®} O3A | 0.45 |
| Biocide | ACTICIDE^{®} B20 | 0.18 |
| | ACTICIDE ^{®} M20 | 0.14 |
| Chelating Agent | TRILON^{®} M | 0.08 |
| Carbon Black Dispersion | Proprietary formulation | 5.00 |
| Water | | balance |

Dogbones were printed in the Z-direction in four different print runs, D1, D2, D3, D4. For print runs D1, D2, polyamide 12 was the build material and the high solvent loading melt flow property reduction agent was used. For print runs D3, D4, polyamide 12 was the build material and the low solvent loading melt flow property reduction agent was used. During each print run D1, D2, D3, D4, 6 dogbones were printed at the front of the printing bed and 6 dogbones were formed at the back of the printing bed. For each layer of the dogbones, a layer of the polyamide 12 was applied to the powder bed surface and then the respective melt flow property reduction agent was applied at about 13 pL/93^{rd} of a square cm (13 pL/600^{th} of a square inch) in the dogbone pattern. The dogbones printed with the high solvent loading melt flow property reduction agent (during print runs D1, D2) had more solvent applied thereto than the dogbones printed with the low solvent loading melt flow property reduction agent (during print runs D3, D4). The printing bed was held at 160°C, and halogen fusing lamps were scanned across the build area. The parts reached about 189°C with the fusing lamps, as measured with an IR camera. The fuse speed ranged from about 15 ips to about 16 ips. The process resulted in solid parts.

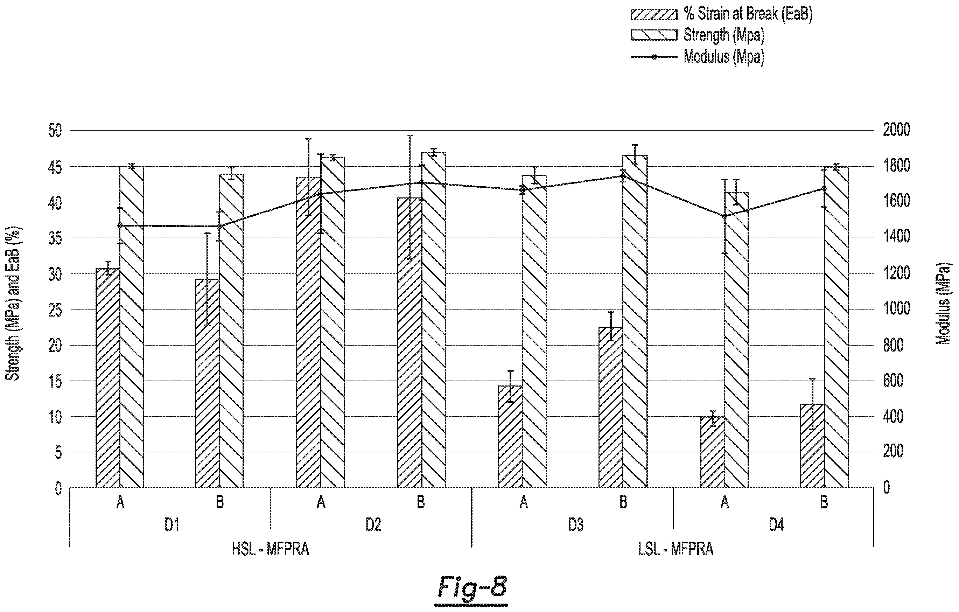

The respective dogbones formed during each run D1, D2, D3, D4 were tested for elongation/strain at break (elasticity), strength, and modulus using an Instron tensile test machine, and the results for each run D1, D2, D3, D4 were averaged for the dogbones that were printed at the front of the printing bed (labeled A in Fig. 8) and for the ogbones that were printed at the back of the printing bed (labeled B in Fig. 8) for the particular run D1, D2, D3, D4. For the tests, the dogbones were mounted in the machine and each end was uniaxially pulled until it failed. During this process, the force required to pull the specimen, as well as elongation of the part were measured via an extensometer attachment. The averaged results for the dogbones A, B printed during each run D1, D2, D3, D4 are shown in Fig. 8.

The results indicated a 2x increase in elongation/strain at break (elasticity) when the dogbones were printed in the Z direction (i.e., with the long axis of the dogbone parallel (Z) to the build direction) with the high solvent loading melt flow property reduction agent (HSL-MFPRA). The additional 2-pyrrolidinone caused a 2x increase in Z-elongation, which can be readily attributed to the melting point depression because Z-elongation can be considered a function of how much time and the temperature at which an interface spends above the melting pointing. When the melting point is lower, the interface is able to spend more time at a broader range of temperatures above the melting point.

### Prophetic Example 1

A powder bed of metallic indium (Tₘ = 157°C) is kept at a controlled temperature using a set of overhead lamps at 130°CC, which is 17 degrees below the melting point of indium. A liquid eutectic indium-gallium alloy, with the composition of 16 atomic% of indium and 86 atomic% of gallium (Tₘ = 15.5°C) is printed using a piezo printhead in the areas of the indium powder that are to be solidified. The ink flux of the alloy is controlled in such a way that the local atomic percentage of indium in the powder is reduced from 100% to about 90%. As the alloy from the jetted drops combines with the indium in the powder, the system locally melts, because the melting point is now locally below the temperature of the powder bed.

Another layer of metallic indium powder is deposited and brought to a temperature of 130°C, and the process is repeated until the whole part is built.

### Prophetic Example 2

A powder bed of a hydrocarbon paraffin (n-C₃₄H₇₀) (Tₘ = 74°C) is kept at a controlled temperature using a set of overhead lamps at 60°C, which is 14 degrees below the melting point of the hydrocarbon paraffin. A liquid hydrocarbon, tetradecane (Tₘ = 4°C) is printed using a piezo printhead in the areas of the hydrocarbon paraffin that are to be solidified. The ink flux of tetradecane is controlled in such a way that the local atomic percentage of the hydrocarbon paraffin in the powder is reduced from 100% to about 50%. As tetradecane from the jetted drops combines with the hydrocarbon paraffin, the hydrocarbon paraffin locally melts, because the melting point is now locally below the temperature of the powder bed.

Another layer of the hydrocarbon paraffin is deposited and brought to a temperature of 60°C, and the process is repeated until the whole part is built.

Reference throughout the specification to "one example", "another example", "an example", and so forth, means that a particular element (e.g., feature, structure, and/or characteristic) described in connection with the example is included in at least one example described herein, and may or may not be present in other examples. In addition, it is to be understood that the described elements for any example may be combined in any suitable manner in the various examples unless the context clearly dictates otherwise.

It is to be understood that the ranges provided herein include the stated range and any value or sub-range within the stated range. For example, a range from about 10 µm to about 200 µm should be interpreted to include the explicitly recited limits of about 10 µm to about 200 µm, as well as individual values, such as 50 µm, 125 µm, 130.5 µm, 195 µm, etc., and sub-ranges, such as from about 35 µm to about 175 µm, from about 60 µm to about 125 µm, from about 15 µm to about 155 µm, etc. Furthermore, when "about" is utilized to describe a value, this is meant to encompass minor variations (up to +/- 10%) from the stated value

In describing and claiming the examples disclosed herein, the singular forms "a", "an", and "the" include plural referents unless the context clearly dictates otherwise.

While several examples have been described in detail, it is to be understood that the disclosed examples may be modified. Therefore, the foregoing description is to be considered non-limiting.

## Claims

1. A three-dimensional (3D) printing method, comprising:
applying a crystalline or semi-crystalline build material, wherein the crystalline or semi-crystalline build material is a polymer in powder form; a metal in particulate form; or a hydrocarbon wax material in particulate form;
maintaining a temperature of the crystalline or semi-crystalline build material within 100°C below a melting point of the crystalline or semi-crystalline build material; and
applying a melt flow property reduction agent to at least a portion of the crystalline or semi-crystalline build material, wherein the melt flow property reduction agent reduces the melting or coalescing temperature of the at least a portion of the crystalline or semi-crystalline build material, thereby causing the at least the portion of the crystalline or semi-crystalline build material in contact with the melt flow property reduction agent to melt or coalesce at the temperature.

2. The 3D printing method as defined in claim 1 wherein the crystalline or semi- crystalline build material is a crystalline or semi-crystalline polymer build material powder, and wherein the melt flow property reduction agent includes a solvent which becomes at least partially mixed with the crystalline or semi-crystalline polymer build material powder at the temperature.

3. The 3D printing method as defined in claim 2 wherein the solvent is present in the melt flow property reduction agent in an amount ranging from about 5 wt% to about 100 wt% of a total wt% of the melt flow property reduction agent.

4. The 3D printing method as defined in claim 2 wherein:
the crystalline or semi-crystalline polymer build material powder is a polyamide and the solvent is selected from the group consisting of 2-pyrrolidone, N-2- hydroxyethyl-2-pyrrolidone, N-methyl-2-pyrrolidone, urea, ethylene carbonate, propylene carbonate, lactones, diethylene glycol, triethylene glycol, tetraethylene glycol, methyl 4-hydroxybenzoate, dimethyl sulfoxide, and dioctyl phthalate; or
the crystalline or semi-crystalline polymer build material powder is polypropylene or polyethylene and the solvent is decalin; or
the crystalline or semi-crystalline polymer build material powder is polyoxomethylene and the solvent is selected from the group consisting of N-methyl pyrrolidone, gamma-butyrolactone, dimethylformamide, and phenylmethanol.

5. The 3D printing method as defined in claim 2 wherein a mass loading of the solvent applied to the crystalline or semi-crystalline build material is sufficient to create a local melting point depression within the at least the portion of the build material, wherein the mass loading is a mass fraction of the solvent to the solvent plus the crystalline or semi-crystalline build material, and wherein the mass fraction ranges from about 0.1 to about 0.9.

6. The 3D printing method as defined in claim 2 wherein the melt flow property reduction agent further includes about 5 wt% of carbon black.

7. The 3D printing method as defined in claim 1 wherein a viscosity of the at least the portion of the crystalline or semi-crystalline build material is reduced by applying the melt flow property reduction agent.

8. The 3D printing method as defined in claim 1 wherein the crystalline or semi- crystalline build material is a metal build material, and wherein the melt flow property reduction agent is selected from the group consisting of a liquid eutectic alloy, a mercury amalgam, and a nanoparticle dispersion including metal nanoparticles therein.

9. The 3D printing method as defined in claim 8 wherein:
the metal build material is indium and the melt flow property reduction agent is an indium-gallium liquid eutectic alloy; or
the metal build material is a metal, and the melt flow property reduction agent is the mercury amalgam.

10. The 3D printing method as defined in claim 1 wherein the crystalline or semi-crystalline build material is a hydrocarbon wax build material, and wherein the melt flow property reduction agent is a liquid hydrocarbon.

11. The 3D printing method as defined in claim 10 wherein:
the hydrocarbon wax build material has 40 or more carbon atoms; and the liquid hydrocarbon is a C10 to C14 hydrocarbon.

12. The 3D printing method as defined in claim 1, further comprising applying a liquid functional agent to the at least the portion of the crystalline or semi-crystalline build material, the liquid functional agent including a radiation absorber therein.

13. A three-dimensional (3D) printing method, comprising:
applying a crystalline or semi-crystalline build material; wherein the crystalline or semi-crystalline build material is a polymer in powder form; a metal in particulate form; or a hydrocarbon wax material in particulate form;
applying a liquid functional agent to a portion of the crystalline or semi- crystalline build material, wherein the liquid functional agent includes a radiation absorber;
exposing the crystalline or semi-crystalline build material to radiation, whereby the liquid functional agent at least partially fuses the portion of the crystalline or semi- crystalline build material in contact with the liquid functional agent to form a part layer;
maintaining a temperature of the crystalline or semi-crystalline build material within 100°C below a melting point of the crystalline or semi-crystalline build material; and
applying a melt flow property reduction agent to another portion of the build material, wherein the melt flow property reduction agent reduces the melting or coalescing temperature of the another portion of the build material, thereby causing the other portion of the build material in contact with the melt flow property reduction agent to melt or coalesce at the temperature.

14. The 3D printing method as defined in claim 13 wherein:
the crystalline or semi-crystalline build material is a crystalline or semi- crystalline polymer build material powder, and the melt flow property reduction agent includes a solvent which becomes at least partially mixed with the crystalline or semi- crystalline polymer build material powder at the temperature; or
the crystalline or semi-crystalline build material is a metal build material, and the melt flow property reduction agent is selected from the group consisting of a liquid eutectic alloy, a mercury amalgam, and a nanoparticle dispersion including metal nanoparticles; or
the crystalline or semi-crystalline build material is a hydrocarbon wax build material, and the melt flow property reduction agent is a liquid hydrocarbon.

15. A three-dimensional (3D) printing method, comprising:
applying a crystalline or semi-crystalline build material, wherein the crystalline or semi-crystalline build material is a polymer in powder form; a metal in particulate form; or a hydrocarbon wax material in particulate form;
applying a liquid functional agent to at least a portion of the build material, wherein the liquid functional agent includes a radiation absorber;
exposing the build material to radiation, whereby the liquid functional agent at least partially fuses the portion of the build material in contact with the liquid functional agent to form a part layer;
applying additional crystalline or semi-crystalline build material to the part layer; maintaining a temperature of the additional crystalline or semi-crystalline build material within 100°C below the melting point of the crystalline or semi-crystalline build material; and
applying a melt flow property reduction agent to at least a portion of the additional crystalline or semi-crystalline build material, wherein the melt flow property reduction agent reduces the melting or coalescing temperature of the at least a portion of the additional crystalline or semi-crystalline build material, thereby causing the at least the portion of the additional build material in contact with the melt flow property reduction agent to melt or coalesce at the temperature and to form a surface layer on the part layer.

## Patentansprüche

1. Dreidimensionales (3D) Druckverfahren, das Folgendes umfasst:
Aufbringen eines kristallinen oder halbkristallinen Baumaterials, wobei das kristalline oder halbkristalline Baumaterial ein Polymer in Pulverform ist; ein Metall in Partikelform; oder ein Kohlenwasserstoffwachsmaterial in Partikelform;
Aufrechterhalten einer Temperatur des kristallinen oder halbkristallinen Baumaterials innerhalb von 100 °C unter einem Schmelzpunkt des kristallinen oder halbkristallinen Baumaterials; und
Aufbringen eines Schmelzflusseigenschaftsreduktionsmittels auf mindestens einen Abschnitt des kristallinen oder halbkristallinen Baumaterials, wobei das Schmelzflusseigenschaftsreduktionsmittel die Schmelz- oder Koaleszenztemperatur des mindestens einen Abschnitts des kristallinen oder halbkristallinen Baumaterials reduziert, wodurch der mindestens eine Abschnitt des kristallinen oder halbkristallinen Baumaterials, das mit dem Schmelzflusseigenschaftsreduktionsmittel in Kontakt steht, veranlasst wird, bei der Temperatur zu schmelzen oder zu koaleszieren.

2. 3D-Druckverfahren nach Anspruch 1, wobei das kristalline oder halbkristalline Baumaterial ein kristallines oder halbkristallines Polymerbaumaterialpulver ist, und wobei das Schmelzflusseigenschaftsreduktionsmittel ein Lösungsmittel beinhaltet, das mindestens teilweise mit dem kristallinen oder halbkristallinen Polymerbaumaterialpulver bei der Temperatur gemischt wird.

3. 3D-Druckverfahren nach Anspruch 2, wobei das Lösungsmittel in dem Schmelzflusseigenschaftsreduktionsmittel in einer Menge in einem Bereich von etwa zu 5 Gew.-% bis etwa 100 Gew.-% eines gesamten Gew.-% des Schmelzflusseigenschaftsreduktionsmittels vorhanden ist.

4. 3D-Druckverfahren nach Anspruch 2, wobei:
das kristalline oder halbkristalline Polymerbaumaterialpulver ein Polyamid ist und das Lösungsmittel aus der Gruppe ausgewählt ist, bestehend aus 2-Pyrrolidon, N-2-hydroxyethyl-2-pyrrolidon, N-methyl-2-pyrrolidon, Harnstoff, Ethylencarbonat, Propylencarbonat, Lactonen, Diethylenglycol, Triethylenglycol, Tetraethylenglycol, Methyl-4-hydroxybenzoat, Dimethylsulfoxid und Dioctylphthalat; oder
das kristalline oder halbkristalline Polymerbaumaterialpulver Polypropylen oder Polyethylen ist und das Lösungsmittel Decalin ist; oder
das kristalline oder halbkristalline Polymerbaumaterial Polyoxmethylen ist und das Lösungsmittel aus der Gruppe ausgewählt ist, bestehend aus N-Methylpyrrolidon, Gamma-Butyrolacton, Dimethylformamid und Phenylmethanol.

5. 3D-Druckverfahren nach Anspruch 2, wobei eine Massenbeladung des Lösungsmittels, das auf das kristalline oder halbkristalline Baumaterial aufgebracht wird, ausreicht, um eine lokale Schmelzpunktvertiefung innerhalb des mindestens den Abschnitts des Baumaterials zu erzeugen, wobei die Massenbeladung eine Massenfraktion des Lösungsmittels zu dem Lösungsmittel plus dem kristallinen oder halbkristallinen Baumaterial ist und wobei der Massenfraktion in einem Bereich von etwa 0,1 bis etwa 0,9 liegt.

6. 3D-Druckverfahren nach Anspruch 2, wobei das Schmelzflusseigenschaftsreduktionsmittel ferner etwa 5 Gew.-% Ruß beinhaltet.

7. 3D-Druckverfahren nach Anspruch 1, wobei eine Viskosität des mindestens den Abschnitts des kristallinen oder halbkristallinen Baumaterials durch Aufbringen des Schmelzflusseigenschaftsreduktionsmittels reduziert wird.

8. 3D-Druckverfahren nach Anspruch 1, wobei das kristalline oder halbkristalline Baumaterial ein Metallbaumaterial ist und wobei das Schmelzflusseigenschaftsreduktionsmittel aus der Gruppe ausgewählt ist, bestehend aus einer flüssigen eutektischen Legierung, einem Quecksilberamalgam und einer Nanopartikeldispersion, die Metallnanopartikel darin beinhaltet.

9. 3D-Druckverfahren nach Anspruch 8, wobei:
das Metallbaumaterial Indium ist und das Schmelzflusseigenschaftsreduktionsmittel eine Indium-Gallium-flüssigeeutektische-Legierung ist; oder
das Metallbaumaterial ein Metall ist und das Schmelzflusseigenschaftsreduktionsmittel das Quecksilberamalgam ist.

10. 3D-Druckverfahren nach Anspruch 1, wobei das kristalline oder halbkristalline Baumaterial ein Kohlenwasserstoffwachsbaumaterial ist und wobei das Schmelzflusseigenschaftsreduktionsmittel ein flüssiger Kohlenwasserstoff ist.

11. 3D-Druckverfahren nach Anspruch 10, wobei:
das Kohlenwasserstoffwachsbaumaterial 40 oder mehr Kohlenstoffatome aufweist; und der flüssige Kohlenwasserstoff ein C10 bis C14-Kohlenwasserstoff ist.

12. 3D-Druckverfahren nach Anspruch 1, das ferner ein Aufbringen eines flüssigen funktionellen Mittels auf den mindestens den Abschnitt des kristallinen oder halbkristallinen Baumaterials umfasst, wobei das flüssige funktionelle Mittel einen Strahlungsabsorber darin beinhaltet.

13. Dreidimensionales (3D) Druckverfahren, das Folgendes umfasst:
Aufbringen eines kristallinen oder halbkristallinen Baumaterials; wobei das kristalline oder halbkristalline Baumaterial ein Polymer in Pulverform; ein Metall in Partikelform; oder ein Kohlenwasserstoffwachsmaterial in Partikelform ist;
Aufbringen eines flüssigen funktionellen Mittels auf einen Abschnitt des kristallinen oder halbkristallinen Baumaterials, wobei das flüssige funktionelle Mittel einen Strahlungsabsorbator beinhaltet;
Aussetzen des kristallinen oder halbkristallinen Baumaterials gegenüber Strahlung, wobei dadurch das flüssige funktionelle Mittel den Abschnitt des kristallinen oder halbkristallinen Baumaterials mindestens teilweise in Kontakt mit dem flüssigen Funktionsmittel verschmilzt, um eine Teilschicht auszubilden;
Aufrechterhalten einer Temperatur des kristallinen oder halbkristallinen Baumaterials innerhalb von 100 °C unter einem Schmelzpunkt des kristallinen oder halbkristallinen Baumaterials; und
Aufbringen eines Schmelzflusseigenschaftsreduktionsmittels auf einen anderen Abschnitt des Baumaterials, wobei das Schmelzflusseigenschaftsreduktionsmittel die Schmelz- oder Koaleszenztemperatur des anderen Abschnitts des Baumaterials reduziert, wodurch der andere Abschnitt des Baumaterials, der mit dem Schmelzflusseigenschaftsreduktionsmittel in Kontakt steht, veranlasst wird, bei der Temperatur zu schmelzen oder zu koaleszieren.

14. 3D-Druckverfahren nach Anspruch 13, wobei:
das kristalline oder halbkristalline Baumaterial ein kristallines oder halbkristallines Polymerbaumaterial ist, und das Schmelzflusseigenschaftsreduktionsmittel ein Lösungsmittel beinhaltet, das mindestens teilweise mit dem kristallinen oder halbkristallinen Polymerbaumaterialpulver bei der Temperatur gemischt wird; oder
das kristalline oder halbkristalline Baumaterial ein Metallbaumaterial ist und das Schmelzflusseigenschaftsreduktionsmittel aus der Gruppe ausgewählt ist, bestehend aus einer flüssigen eutektischen Legierung, einem Quecksilberamalgam und einer Nanopartikeldispersion, die Metallnanopartikel beinhaltet; oder
das kristalline oder halbkristalline Baumaterial ein Kohlenwasserstoffwachsbaumaterial ist und das Schmelzflusseigenschaftsreduktionsmittel ein flüssiger Kohlenwasserstoff ist.

15. Dreidimensionales (3D) Druckverfahren, das Folgendes umfasst:
Aufbringen eines kristallinen oder halbkristallinen Baumaterials, wobei das kristalline oder halbkristalline Baumaterial ein Polymer in Pulverform; ein Metall in Partikelform; oder ein Kohlenwasserstoffwachsmaterial in Partikelform ist;
Aufbringen eines flüssigen funktionellen Mittels auf mindestens einen Abschnitt des Baumaterials, wobei das flüssige funktionelle Mittel einen Strahlungsabsorbator beinhaltet;
Aussetzen des Baumaterials gegenüber Strahlung, wobei dadurch das flüssige funktionelle Mittel den Abschnitt des Baumaterials, der mit dem flüssigen Funktionsmittel in Kontakt steht, mindestens teilweise verschmilzt, um eine Teilschicht auszubilden;
Aufbringen von zusätzlichem kristallinem oder halbkristallinem Baumaterial auf die Teilschicht; Aufrechterhalten einer Temperatur des zusätzlichen kristallinen oder halbkristallinen Baumaterials innerhalb von 100 °C unter dem Schmelzpunkt des kristallinen oder halbkristallinen Baumaterials; und Aufbringen eines Schmelzflusseigenschaftsreduktionsmittels auf mindestens einen Abschnitt des zusätzlichen kristallinen oder halbkristallinen Baumaterials, wobei das Schmelzflusseigenschaftsreduktionsmittel die Schmelz- oder Koaleszenztemperatur des mindestens einen Abschnitts des zusätzlichen kristallinen oder halbkristallinen Baumaterials reduziert, wodurch der mindestens eine Abschnitt des zusätzlichen Baumaterials, der mit dem Schmelzflusseigenschaftsreduktionsmittel in Kontakt steht, veranlasst wird, um bei der Temperatur zu schmelzen oder zu koaleszieren und eine Oberflächenschicht auf der Teilschicht auszubilden.

## Revendications

1. Procédé d'impression en trois dimensions (3D), comprenant :
l'application d'un matériau de construction cristallin ou semi-cristallin, dans lequel le matériau de construction cristallin ou semi-cristallin est un polymère sous forme de poudre ; un métal sous forme particulaire ; ou un matériau de cire d'hydrocarbure sous forme particulaire ;
le maintien d'une température du matériau de construction cristallin ou semi-cristallin dans les limites de 100 °C en dessous d'un point de fusion du matériau de construction cristallin ou semi-cristallin ; et
l'application d'un agent de réduction des propriétés d'écoulement en fusion à au moins une partie du matériau de construction cristallin ou semi-cristallin, dans lequel l'agent de réduction des propriétés d'écoulement en fusion réduit la température de fusion ou de coalescence de l'au moins une partie du matériau de construction cristallin ou semi-cristallin, amenant ainsi l'au moins la partie du matériau de construction cristallin ou semi-cristallin en contact avec l'agent de réduction des propriétés d'écoulement en fusion à fondre ou coalescer à la température.

2. Procédé d'impression 3D selon la revendication 1, dans lequel le matériau de construction cristallin ou semi-cristallin est une poudre de matériau de construction polymère cristallin ou semi-cristallin, et dans lequel l'agent de réduction des propriétés d'écoulement en fusion comporte un solvant qui devient au moins partiellement mélangé avec la poudre de matériau de construction polymère cristallin ou semi-cristallin à la température.

3. Procédé d'impression 3D selon la revendication 2, dans lequel le solvant est présent dans l'agent de réduction des propriétés d'écoulement en fusion en une quantité allant d'environ 5 % en poids à environ 100 % en poids d'un % en poids total de l'agent de réduction des propriétés d'écoulement en fusion.

4. Procédé d'impression 3D selon la revendication 2, dans lequel :
la poudre de matériau de construction polymère cristallin ou semi-cristallin est un polyamide et le solvant est choisi dans le groupe constitué de 2-pyrrolidone, N-2-hydroxyéthyl-2-pyrrolidone, N-méthyl-2-pyrrolidone, urée, carbonate d'éthylène, carbonate de propylène, lactones, diéthylène glycol, triéthylène glycol, tétraéthylène glycol, 4-hydroxybenzoate de méthyle, sulfoxyde de diméthyle et dioctyl phtalate ; ou
la poudre de matériau de construction polymère cristallin ou semi-cristallin est du polypropylène ou du polyéthylène et le solvant est la décaline ; ou
la poudre de matériau de construction polymère cristallin ou semi-cristallin est le polyoxométhylène et le solvant est choisi dans le groupe constitué de N-méthyl pyrrolidone, gamma-butyrolactone, diméthylformamide et phénylméthanol.

5. Procédé d'impression 3D selon la revendication 2, dans lequel une charge massique du solvant appliqué au matériau de construction cristallin ou semi-cristallin est suffisante pour créer une dépression de point de fusion local à l'intérieur de l'au moins une partie du matériau de construction, dans lequel la charge massique est une fraction massique du solvant au solvant plus le matériau de construction cristallin ou semi-cristallin, et dans lequel la fraction massique est dans la plage d'environ 0,1 à environ 0,9.

6. Procédé d'impression 3D selon la revendication 2, dans lequel l'agent de réduction des propriétés d'écoulement en fusion comprend en outre environ 5 % en poids de noir de carbone.

7. Procédé d'impression 3D selon la revendication 1, dans lequel une viscosité de l'au moins la partie du matériau de construction cristallin ou semi-cristallin est réduite en appliquant l'agent de réduction des propriétés d'écoulement en fusion.

8. Procédé d'impression 3D selon la revendication 1, dans lequel le matériau de construction cristallin ou semi-cristallin est un matériau de construction métallique, et dans lequel l'agent de réduction des propriétés d'écoulement en fusion est choisi dans le groupe constitué d'un alliage eutectique liquide, d'un amalgame de mercure et d'une dispersion de nanoparticules comportant des nanoparticules métalliques à l'intérieur.

9. Procédé d'impression 3D selon la revendication 8, dans lequel :
le matériau de construction métallique est de l'indium et l'agent de réduction des propriétés d'écoulement en fusion est un alliage eutectique liquide d'indium-gallium ; ou
le matériau de construction métallique est un métal, et l'agent de réduction des propriétés d'écoulement en fusion est l'amalgame de mercure.

10. Procédé d'impression 3D selon la revendication 1, dans lequel le matériau de construction cristallin ou semi-cristallin est un matériau de construction en cire d'hydrocarbure, et dans lequel l'agent de réduction des propriétés d'écoulement en fusion est un hydrocarbure liquide.

11. Procédé d'impression 3D selon la revendication 10, dans lequel :
le matériau de construction en cire d'hydrocarbure a au moins 40 atomes de carbone ; et l'hydrocarbure liquide est un hydrocarbure en C10 à C14.

12. Procédé d'impression 3D selon la revendication 1, comprenant en outre l'application d'un agent fonctionnel liquide à l'au moins une partie du matériau de construction cristallin ou semi-cristallin, l'agent fonctionnel liquide comportant un absorbeur de rayonnement à l'intérieur.

13. Procédé d'impression en trois dimensions (3D), comprenant :
l'application d'un matériau de construction cristallin ou semi-cristallin ; dans lequel le matériau de construction cristallin ou semi-cristallin est un polymère sous forme de poudre ; un métal sous forme particulaire ; ou un matériau de cire d'hydrocarbure sous forme particulaire ;
l'application d'un agent fonctionnel liquide à une partie du matériau de construction cristallin ou semi-cristallin, dans lequel l'agent fonctionnel liquide comporte un absorbeur de rayonnement ;
l'exposition du matériau de construction cristallin ou semi-cristallin à un rayonnement, moyennant quoi l'agent fonctionnel liquide fusionne au moins partiellement la partie du matériau de construction cristallin ou semi-cristallin en contact avec l'agent fonctionnel liquide pour former une couche partielle ;
le maintien d'une température du matériau de construction cristallin ou semi-cristallin dans les limites de 100 °C en dessous d'un point de fusion du matériau de construction cristallin ou semi-cristallin ; et
l'application d'un agent de réduction des propriétés d'écoulement en fusion à une autre partie du matériau de construction, dans lequel l'agent de réduction des propriétés d'écoulement en fusion réduit la température de fusion ou de coalescence de l'autre partie du matériau de construction, amenant ainsi l'autre partie du matériau de construction en contact avec l'agent de réduction des propriétés d'écoulement en fusion à fondre ou coalescer à la température.

14. Procédé d'impression 3D selon la revendication 13, dans lequel :
le matériau de construction cristallin ou semi-cristallin est une poudre de matériau de construction polymère cristallin ou semi-cristallin, et l'agent de réduction des propriétés d'écoulement en fusion comporte un solvant qui devient au moins partiellement mélangé à la poudre de matériau de construction polymère cristallin ou semi-cristallin à la température ; ou
le matériau de construction cristallin ou semi-cristallin est un matériau de construction métallique, et l'agent de réduction des propriétés d'écoulement en fusion est choisi dans le groupe constitué d'un alliage eutectique liquide, d'un amalgame de mercure et d'une dispersion de nanoparticule comportant des nanoparticules métalliques ; ou
le matériau de construction cristallin ou semi-cristallin est un matériau de construction en cire d'hydrocarbure, et l'agent de réduction des propriétés d'écoulement en fusion est un hydrocarbure liquide.

15. Procédé d'impression en trois dimensions (3D), comprenant :
l'application d'un matériau de construction cristallin ou semi-cristallin, dans lequel le matériau de construction cristallin ou semi-cristallin est un polymère sous forme de poudre ; un métal sous forme particulaire ; ou un matériau de cire d'hydrocarbure sous forme particulaire ;
l'application d'un agent fonctionnel liquide à au moins une partie du matériau de construction, dans lequel l'agent fonctionnel liquide comporte un absorbeur de rayonnement ;
l'exposition du matériau de construction à un rayonnement, moyennant quoi l'agent fonctionnel liquide fusionne au moins partiellement la partie du matériau de construction en contact avec l'agent fonctionnel liquide pour former une couche partielle ;
l'application d'un matériau de construction cristallin ou semi-cristallin supplémentaire à la couche partielle ; le maintien d'une température du matériau de construction cristallin ou semi-cristallin supplémentaire à l'intérieur de 100 °C en dessous du point de fusion du matériau de construction cristallin ou semi-cristallin ; et
l'application d'un agent de réduction des propriétés d'écoulement en fusion à au moins une partie du matériau de construction cristallin ou semi-cristallin supplémentaire, dans lequel l'agent de réduction des propriétés d'écoulement en fusion réduit la température de fusion ou de coalescence de l'au moins une partie du matériau de construction cristallin ou semi-cristallin supplémentaire, amenant ainsi l'au moins la partie du matériau de construction supplémentaire en contact avec l'agent de réduction des propriétés d'écoulement en fusion à fondre ou coalescer à la température et à former une couche de surface sur la couche partielle.
